# FASCICULE DE BREVET EUROPEEN

(11) **EP 2 070 254 B1**
(45) Date de publication et mention de la délivrance du brevet: **05.06.2019**
(21) Numéro de dépôt: 07731317.9
(22) Date de dépôt: 18.04.2007
(51) Int. Cl.: H04L 9/32

(54) **PROCEDE ET DISPOSITIF DE SECURISATION DE TRANSFERTS DE DONNEES**
VERFAHREN UND EINRICHTUNG ZUR SICHERUNG VON DATENTRANSFERS
METHOD AND DEVICE FOR SECURING DATA TRANSFERS

(30) Priorité: 18.04.2006 FR 0603415; 09.05.2006 FR 0604108; 09.05.2006 FR 0604107; 16.05.2006 FR 0604481
(43) Date de publication de la demande: 17.06.2009
(73) Titulaire: Trustcorp S.A., 4220 Esch-sur-Alzette (LU)
(72) Inventeur: LAFON, Martin, 91400 Orsay (FR); BLOT-LEFEVRE, Eric, 92200 Neuilly-sur-Seine (FR)
(86) Numéro de dépôt international: PCT/FR2007/000653
(87) Numéro de publication internationale: WO 2007/119012

(56) Documents cités:
- US-A- 6 047 103
- US-A1- 2003 229 705
- US-A1- 2005 120 244
- MENEZES, VANSTONE, OORSCHOT: "Handbook of Applied Cryptography" 1997, CRC PRESS LLC , USA , XP002424508 page 490 - page 491 page 547 - page 550 page 581 - page 582

## Description

La présente invention concerne un procédé et un dispositif de sécurisation de transferts de données. Elle s'applique, en particulier, à la transmission de courriers, factures, documents juridiques ou comptables, avec avis de réception.

On connait des procédés hybrides, électronique et postaux, qui comportent une étape d'envoi d'un courrier électronique avec fourniture d'une adresse postale du destinataire, l'organisme postal imprimant ce courrier et acheminant sa version imprimée par des moyens postaux traditionnels, avec remise en main propre et signature, par le destinataire, d'un avis de réception.

On connait aussi des procédés de transmission de courriers électroniques dits sécurisés, mettant en oeuvre, tant au niveau de l'émetteur qu'au niveau du destinataire, une signature électronique, par exemple une signature électronique conforme à l'infrastructure à clés publiques PKI (acronyme de «Public Key Infrastructure»). Ces procédés ne garantissent pas que le destinataire a été informé de l'arrivée d'un courrier électronique et ne possèdent de valeur légale qu'en cas de réception effective du courrier électronique par le destinataire.

Ces procédés et dispositifs présentent de nombreux autres inconvénients.

Ils ne permettent pas l'envoi aisé d'une grande quantité de documents hétérogènes. Ils ne garantissent pas qu'un original est à la disposition de l'émetteur et qu'un original est à la disposition du destinataire, comme c'est l'usage pour les documents légaux.

Ils ne permettent pas l'envoi de courriers à des destinataires ne disposant d'aucun moyen d'identification préalable.

Le brevet américain US6047103 divulgue un dispositif de transmission de fichiers comprenant une unité permettant d'interdire une transmission si le destinataire n'est pas authentifié. Ce dispositif ne permet pas cependant de choisir le niveau de qualité de service qui doit être associé à la transmission d'un document à un destinataire.

La présente invention vis à remédier à ces inconvénients.

A cet effet, la présente invention vise, selon un premier aspect, un procédé de sécurisation de transfert de données, caractérisé en ce qu'il comporte :
- une étape de création d'un document par un émetteur de document,
- une étape d'identification d'au moins un destinataire dudit document,
- une étape de mise en mémoire d'une copie du document dans une première mémoire accessible par l'émetteur du document mais pas accessible par un destinataire du document,
- pour chaque destinataire du document, une étape de mise en mémoire d'une copie du document dans une deuxième mémoire accessible par ledit destinataire du document mais pas accessible par l'émetteur du document et
- une étape de transmission à chaque destinataire du document, d'une information représentative de l'existence d'une copie du document à sa disposition dans une dite deuxième mémoire.

Grace à ces dispositions, chacun, de l'émetteur et du destinataire, dispose d'une mémoire où sont archivés les documents dont ils ont été, respectivement, émetteur et destinataire. Chacun d'eux dispose donc d'un original et peut le faire archiver en un lieu de son choix, sans risquer d'interférer avec l'autre original.

Grâce à ces dispositions, le destinataire d'un document peut être assuré de l'identité de l'émetteur de ce document.

Selon des caractéristiques particulières, le procédé tel que succinctement exposé ci-dessus comporte une étape d'association au document d'un certificat d'intégrité rendant détectable toute modification ultérieure dudit document, ledit certificat d'intégrité étant mémorisé, dans les première et deuxième mémoires, en relation avec les copies dudit document.

Grâce à ces dispositions, chaque partie à la correspondance peut vérifier que le document n'a pas été modifié entre sa création et sa remise au destinataire ou sa consultation ultérieure.

Selon un deuxième aspect, la présente invention vise un dispositif de sécurisation de transfert de données, caractérisé en ce qu'il comporte :
- un moyen de création d'un document par un émetteur de document,
- un moyen d'identification d'au moins un destinataire dudit document,
- un moyen de mise en mémoire du document dans une première mémoire accessible par l'émetteur du document mais pas accessible par un destinataire du document,
- pour chaque destinataire du document, un moyen de mise en mémoire du document dans une deuxième mémoire accessible par ledit destinataire du document mais pas accessible par l'émetteur du document et
- un moyen de transmission à chaque destinataire du document, d'une information représentative de l'existence du document à sa disposition dans une deuxième mémoire.

Selon un troisième aspect, la présente invention vise un procédé de sécurisation de transfert de données, caractérisé en ce qu'il comporte :
- une étape de création d'un document par un émetteur de document,
- une étape d'identification d'au moins un destinataire dudit document, ladite identification comportant la détermination d'au moins une adresse électronique dudit destinataire et d'au moins une adresse postale dudit destinataire,
- une étape de mémorisation du document et de l'identification de chaque destinataire,
- une étape de transmission électronique, à au moins une adresse électronique de chaque destinataire du document, d'une information représentative de l'existence du document à sa disposition,
- pour au moins un destinataire du document, une étape de détermination si la durée écoulée depuis l'étape de transmission électronique et avant la réception du document, par ledit destinataire du document, est supérieure à une durée prédéterminée et
- si, pour ledit destinataire du document, la durée écoulée depuis l'étape de transmission électronique et avant la réception du document, par ledit destinataire du document, est supérieure à une durée prédéterminée, une étape d'impression dudit document et de transmission du document imprimé, à une adresse postale dudit destinataire.

Grâce à ces dispositions, l'émetteur du document peut être assuré que le destinataire du document sera informé de l'existence du document à son intention, soit par l'intermédiaire d'une adresse électronique, soit par l'intermédiaire d'une adresse postale. Les risques de non-transmission liés aux difficultés d'accès du destinataire aux messages transmis à une de ses adresses électroniques (par exemple boîte aux lettres électronique saturée, panne de l'hébergeur de cette adresse électronique, obsolescence de l'adresse électronique) sont ainsi réduits.

Selon un quatrième aspect, la présente invention vise un dispositif de sécurisation de transfert de données, caractérisé en ce qu'il comporte :
- un moyen de création d'un document par un émetteur de document,
- un moyen d'identification d'au moins un destinataire dudit document, ladite identification comportant la détermination d'au moins une adresse électronique dudit destinataire et d'au moins une adresse postale dudit destinataire,
- un moyen de mémorisation du document et de l'identification de chaque destinataire,
- un moyen de transmission électronique, à au moins une adresse électronique de chaque destinataire du document, d'une information représentative de l'existence du document à sa disposition,
- pour au moins un destinataire du document, un moyen de détermination si la durée écoulée depuis l'étape de transmission électronique et avant la réception du document, par ledit destinataire du document, est supérieure à une durée prédéterminée et
- un moyen d'impression adapté, si, pour ledit destinataire du document, la durée écoulée depuis l'étape de transmission électronique et avant la réception du document, par ledit destinataire du document, est supérieure à une durée prédéterminée, à imprimer ledit document et de transmission du document imprimé, à une adresse postale dudit destinataire.

Selon un cinquième aspect, la présente invention vise un procédé de sécurisation de transfert de données, caractérisé en ce qu'il comporte :
- une étape de tentative de transmission d'un document depuis un émetteur de document à destination d'au moins un destinataire de document, en mettant en oeuvre au moins un attribut de transmission et
- pour au moins une étape de tentative de transmission, une étape d'évaluation de valeur d'au moins un attribut de transmission et
- une étape de mise à disposition de l'émetteur, de l'évaluation de la valeur de l'attribut de transmission.

Grâce à ces dispositions, l'émetteur peut estimer la qualité de service ou le risque pour la prochaine tentative de transmission audit destinataire. Par exemple, l'émetteur peut estimer la valeur d'une adresse électronique, la fiabilité du service de réception de documents du destinataire et décider de modifier la manière dont il transmettra de nouveaux documents à ce destinataire.

Selon un sixième aspect, la présente invention vise un d10 - Dispositif de sécurisation de transfert de données, caractérisé en ce qu'il comporte :
- un moyen pour effectuer une tentative de transmission d'un document depuis un émetteur de document à destination d'au moins un destinataire de document, en mettant en oeuvre au moins un attribut de transmission et
- pour au moins une étape de tentative de transmission, un moyen d'évaluation adapté à évaluer une valeur d'au moins un attribut de transmission et
- un moyen de mise à disposition de l'émetteur, de l'évaluation de la valeur de l'attribut de transmission.

Selon un septième aspect, la présente invention vise un procédé de sécurisation de transfert de données, caractérisé en ce qu'il comporte :
- une étape d'identification dite « faible » d'un utilisateur au cours de laquelle ledit utilisateur fournit une ou plusieurs adresses électroniques,
- une étape de transmission de message depuis ledit utilisateur ou vers ledit utilisateur, en mettant en oeuvre ladite première identification,
- une étape d'identification dite « forte » d'un utilisateur, au cours de laquelle ledit utilisateur fournit une preuve de son identité et on lui attribut une paire de clés asymétriques et
- une étape de transmission de messages, depuis ledit utilisateur ou vers ledit utilisateur, en mettant en oeuvre ladite paire de clés asymétriques.

Grâce à ces dispositions, un utilisateur peut s'accoutumer à l'utilisation d'une signature électronique et transmettre ou recevoir des messages confidentiels faiblement sécurisés, puis passer à un niveau d'authentification forte dans lequel son identité est garantie à ses interlocuteurs.

Selon un huitième aspect, la présente invention vise un dispositif de sécurisation de transfert de données, caractérisé en ce qu'il comporte :
- un moyen d'identification dite « faible » d'un utilisateur au cours de laquelle ledit utilisateur fournit une ou plusieurs adresses électroniques,
- un moyen de transmission de message depuis ledit utilisateur ou vers ledit utilisateur, en mettant en oeuvre ladite première identification,
- un moyen d'identification dite « forte » d'un utilisateur, au cours de laquelle ledit utilisateur fournit une preuve de son identité et on lui attribut une paire de clés asymétriques et
- un moyen de transmission de messages, depuis ledit utilisateur ou vers ledit utilisateur, en mettant en oeuvre ladite paire de clés asymétriques.

Selon un neuvième aspect, la présente invention vise un procédé de sécurisation de transferts de données, caractérisé en ce qu'il comporte :
- une étape d'affectation de valeurs d'attributs de confiances à un processus de transfert de données depuis un émetteur de document à un destinataire de document,
- une étape d'édition d'un document, par un émetteur de document, au cours de laquelle l'émetteur de document définit au moins un destinataire et des valeurs d'attributs de confiance requises pour la transmission dudit document et
- pour chaque destinataire pour lequel les valeurs d'attributs de confiances affectées au processus de transfert de données depuis l'émetteur à ce destinataire sont toutes supérieures aux valeurs requises, une étape de transmission, audit destinataire, dudit document.

Grâce à ces dispositions, l'émetteur d'un document peut choisir le niveau de qualité de service qui doit être associé à la transmission d'un document à un destinataire. Par exemple, un document jugé très important ou très confidentiel ne sera transmis à un destinataire qu'avec une authentification forte de ce destinataire ou que pendant une durée prédéterminée alors qu'un document jugé de moindre importance ou de moindre confidentialité, par exemple une copie de document important transmis, pour information, à un tiers, sera remis à son destinataire avec une moins stricte authentification de ce destinataire ou pendant une durée plus longue.

Selon un dixième aspect, la présente invention vise un dispositif de sécurisation de transferts de données, caractérisé en ce qu'il comporte :
- un moyen d'affectation de valeurs d'attributs de confiances à un processus de transfert de données depuis un émetteur de document à un destinataire de document,
- un moyen d'édition d'un document, par un émetteur de document, au cours de laquelle l'émetteur de document définit au moins un destinataire et des valeurs d'attributs de confiance requises pour la transmission dudit document et
- un moyen de transmission adapté, pour chaque destinataire pour lequel les valeurs d'attributs de confiances affectées au processus de transfert de données depuis l'émetteur à ce destinataire sont toutes supérieures aux valeurs requises, à transmettre ledit document audit destinataire.

Selon un onzième aspect, la présente invention vise un procédé de sécurisation de transfert de données, caractérisé en ce qu'il comporte :
- une étape de composition d'un document, par un émetteur, en mettant en oeuvre un modèle conserver sur un serveur,
- une étape de vérification de respect, par ledit document, de critères prédéterminés,
- une étape de mise en mémoire dudit document,
- une étape de vérification que la mise en mémoire dudit document respecte des critères prédéterminés,
- une étape de communication à chaque destinataire du document, d'un message l'informant de l'existence d'un document qui lui est destiné,
- une étape de tentative d'accès audit document, par un destinataire dudit document,
- une étape de vérification que ladite tentative d'accès respecte des critères prédéterminés et
- au cas où la tentative d'accès respecte des critères prédéterminés, une étape de transmission dudit document audit destinataire.

Grâce à ces dispositions, l'ensemble du processus de composition, d'archivage et de transmission au destinataire est effectué sous le contrôle du respect de critères prédéterminés, ce qui garantit un haut niveau de qualité de service à l'émetteur du document.

Selon un douzième aspect, la présente invention vise un dispositif de sécurisation de transfert de données, caractérisé en ce qu'il comporte :
- un moyen de composition d'un document, par un émetteur, en mettant en oeuvre un modèle conserver sur un serveur,
- un moyen de vérification de respect, par ledit document, de critères prédéterminés,
- un moyen de mise en mémoire dudit document,
- un moyen de vérification que la mise en mémoire dudit document respecte des critères prédéterminés,
- un moyen de communication à chaque destinataire du document, d'un message l'informant de l'existence d'un document qui lui est destiné,
- un moyen pour effectuer une tentative d'accès audit document, par un destinataire dudit document,
- un moyen de vérification que ladite tentative d'accès respecte des critères prédéterminés et
- un moyen de transmission adapté, au cas où la tentative d'accès respecte des critères prédéterminés, à transmettre ledit document audit destinataire.

Selon un treizième aspect, la présente invention vise un procédé de sécurisation de transfert de données, caractérisé en ce qu'il comporte :
- une étape de création d'un document par un émetteur de document,
- une étape d'identification d'au moins un destinataire dudit document, ladite identification comportant la détermination d'au moins une adresse électronique dudit destinataire et d'au moins une adresse postale dudit destinataire,
- une étape de mémorisation du document et de l'identification de chaque destinataire,
- une étape de transmission électronique, à au moins une adresse électronique de chaque destinataire du document, d'une information représentative de l'existence du document à sa disposition,
- pour au moins un destinataire du document, une étape de détermination si la durée écoulée depuis l'étape de transmission électronique et avant la réception du document, par ledit destinataire du document, est supérieure à une durée prédéterminée et
- si, pour ledit destinataire du document, la durée écoulée depuis l'étape de transmission électronique et avant la réception du document, par ledit destinataire du document, est supérieure à une durée prédéterminée, une étape d'impression dudit document et de transmission du document imprimé, à une adresse postale dudit destinataire.

Grâce à ces dispositions, l'émetteur du document peut être assuré que le destinataire du document sera informé de l'existence du document à son intention, soit par l'intermédiaire d'une adresse électronique, soit par l'intermédiaire d'une adresse postale. Les risques de non-transmission liés aux difficultés d'accès du destinataire aux messages transmis à une de ses adresses électroniques (par exemple boîte aux lettres électronique saturée, panne de l'hébergeur de cette adresse électronique, obsolescence de l'adresse électronique) sont ainsi réduits.

Selon des caractéristiques particulières, le procédé tel que succinctement exposé ci-dessus comporte :
- une étape de mise en mémoire d'une copie du document dans une première mémoire accessible par l'émetteur du document mais pas accessible par un destinataire du document et
- pour chaque destinataire du document, une étape de mise en mémoire d'une copie du document dans une deuxième mémoire accessible par ledit destinataire du document mais pas accessible par l'émetteur du document.

Grâce à ces dispositions, chacun, de l'émetteur et du destinataire, dispose d'une mémoire où sont archivés les documents dont ils ont été, respectivement, émetteur et destinataire. Chacun d'eux dispose donc d'un original et peut le faire archiver en un lieu de son choix, sans risquer d'interférer avec l'autre original.

Ainsi, s'il existe une rupture de correspondance entre deux prestations, ou à l'intérieur même d'une opération en partie double, l'erreur sera détectée et réparée.

Selon des caractéristiques particulières, le procédé tel que succinctement exposé ci-dessus comporte une étape d'horodatage de chaque étape de mise en mémoire d'une copie du document.

Grâce à ces dispositions, chaque partie à la correspondance peut vérifier la date de mise en mémoire de la copie du document dans la mémoire qui lui est réservée.

Selon des caractéristiques particulières, le procédé tel que succinctement exposé ci-dessus comporte une étape d'authentification du destinataire et, en cas d'authentification positive, une étape d'accès, par ledit destinataire, au document qui lui est destiné.

Grâce à ces dispositions, l'émetteur du document peut imposer une authentification du destinataire avant que ce dernier prenne connaissance du document qui lui est destiné. En particulier, l'émetteur du document peut faire valoir cette authentification en cas de contestation ultérieure de la remise du document au destinataire.

Selon des caractéristiques particulières, au cours de ladite étape d'authentification du destinataire, on constitue un accusé de réception et ledit procédé comporte une étape de mise en mémoire, dans chacune des première et deuxième mémoires, dudit accusé de réception en relation avec une copie dudit document.

Grâce à ces dispositions, les deux parties à la correspondance peuvent vérifier la date de remise de la copie du document au destinataire et s'assurer de cette remise de copie.

Selon des caractéristiques particulières, le procédé tel que succinctement exposé ci-dessus comporte une étape de transmission, à une troisième mémoire distante, d'une copie du document.

Grâce à ces dispositions, un tiers, par exemple un huissier, peut effectuer un séquestre de la copie du document et se porter garant du contenu du document créé par l'émetteur du document.

Selon des caractéristiques particulières, le procédé tel que succinctement exposé ci-dessus comporte une étape d'authentification d'un opérateur d'impression et de transmission du document imprimé à ladite adresse postale, une étape de transmission audit opérateur dudit document, une étape d'horodatage de ladite étape de transmission à l'opérateur et une étape d'association, audit document, d'un identifiant dudit opérateur et des données d'horodatage de ladite étape de transmission à l'opérateur.

Grâce à ces dispositions, si un opérateur doit intervenir sur un document, son identifiant, la date et l'heure de sa prise de responsabilité sont connus.

Selon des caractéristiques particulières, au cours de l'étape de création d'un document, on attribue audit document des attributs représentatifs de conditions d'authentification du destinataire.

Grâce à ces dispositions, les conditions de remise d'une copie du document au destinataire du document sont associés et document et limitent un risque d'erreur de remise sans l'authentification demandée par l'émetteur du document.

Selon des caractéristiques particulières, préliminairement à l'étape de création d'un document, on effectue une étape d'authentification de l'émetteur du document.

Grâce à ces dispositions, le destinataire d'un document peut être assuré de l'identité de l'émetteur de ce document.

Selon des caractéristiques particulières, le procédé tel que succinctement exposé ci-dessus comporte une étape d'association au document d'un certificat d'intégrité rendant détectable toute modification ultérieure dudit document, ledit certificat d'intégrité étant mémorisé, dans les première et deuxième mémoires, en relation avec les copies dudit document.

Grâce à ces dispositions, chaque partie à la correspondance peut vérifier que le document n'a pas été modifié entre sa création et sa remise au destinataire ou sa consultation ultérieure.

Selon des caractéristiques particulières le procédé tel que succinctement exposé ci-dessus comporte :
- une étape de tentative de transmission d'un document depuis un émetteur de document à destination d'au moins un destinataire de document, en mettant en oeuvre au moins un attribut de transmission et
- pour au moins une étape de tentative de transmission, une étape d'évaluation de valeur d'au moins un attribut de transmission et
- une étape de mise à disposition de l'émetteur, de l'évaluation de la valeur de l'attribut de transmission.

Grâce à ces dispositions, l'émetteur peut estimer la qualité de service ou le risque pour la prochaine tentative de transmission audit destinataire. Par exemple, l'émetteur peut estimer la valeur d'une adresse électronique, la fiabilité du service de réception de documents du destinataire et décider de modifier la manière dont il transmettra de nouveaux documents à ce destinataire.

Selon des caractéristiques particulières le procédé tel que succinctement exposé ci-dessus comporte :
- une étape d'identification dite « faible » d'un utilisateur au cours de laquelle ledit utilisateur fournit une ou plusieurs adresses électroniques,
- une étape de transmission de message depuis ledit utilisateur ou vers ledit utilisateur, en mettant en oeuvre ladite première identification,
- une étape d'identification dite « forte » d'un utilisateur, au cours de laquelle ledit utilisateur fournit une preuve de son identité et on lui attribut une paire de clés asymétriques et
- une étape de transmission de messages, depuis ledit utilisateur ou vers ledit utilisateur, en mettant en oeuvre ladite paire de clés asymétriques.

Grâce à ces dispositions, un utilisateur peut s'accoutumer à l'utilisation d'une signature électronique et transmettre ou recevoir des messages confidentiels faiblement sécurisés, puis passer à un niveau d'authentification forte dans lequel son identité est garantie à ses interlocuteurs.

Selon des caractéristiques particulières le procédé tel que succinctement exposé ci-dessus comporte :
- une étape d'affectation de valeurs d'attributs de confiances à un processus de transfert de données depuis un émetteur de document à un destinataire de document,
- une étape d'édition d'un document, par un émetteur de document, au cours de laquelle l'émetteur de document définit au moins un destinataire et des valeurs d'attributs de confiance requises pour la transmission dudit document,
- pour chaque destinataire pour lequel les valeurs d'attributs de confiances affectées au processus de transfert de données depuis l'émetteur à ce destinataire sont toutes supérieures aux valeurs requises, une étape de transmission, audit destinataire, dudit document et
- pour chaque destinataire pour lequel les valeurs d'attributs de confiances affectées au processus de transfert de données depuis l'émetteur à ce destinataire ne sont pas toutes supérieures aux valeurs requises, l'étape d'impression du document et de transmission du document imprimé par voie postale.

Grâce à ces dispositions, l'émetteur d'un document peut choisir le niveau de qualité de service qui doit être associé à la transmission d'un document à un destinataire. Par exemple, un document jugé très important ou très confidentiel ne sera transmis à un destinataire qu'avec une authentification forte de ce destinataire ou que pendant une durée prédéterminée alors qu'un document jugé de moindre importance ou de moindre confidentialité, par exemple une copie de document important transmis, pour information, à un tiers, sera remis à son destinataire avec une moins stricte authentification de ce destinataire ou pendant une durée plus longue.

Selon un quatorzième aspect, la présente invention vise un dispositif de sécurisation de transfert de données, caractérisé en ce qu'il comporte :
- un moyen de création d'un document par un émetteur de document,
- un moyen d'identification d'au moins un destinataire dudit document, ladite identification comportant la détermination d'au moins une adresse électronique dudit destinataire et d'au moins une adresse postale dudit destinataire,
- un moyen de mémorisation du document et de l'identification de chaque destinataire,
- un moyen de transmission électronique, à au moins une adresse électronique de chaque destinataire du document, d'une information représentative de l'existence du document à sa disposition,
- pour au moins un destinataire du document, un moyen de détermination si la durée écoulée depuis l'étape de transmission électronique et avant la réception du document, par ledit destinataire du document, est supérieure à une durée prédéterminée et
- un moyen d'impression adapté, si, pour ledit destinataire du document, la durée écoulée depuis l'étape de transmission électronique et avant la réception du document, par ledit destinataire du document, est supérieure à une durée prédéterminée, à imprimer ledit document et de transmission du document imprimé, à une adresse postale dudit destinataire.

Les avantages, buts et caractéristiques de ce dispositif étant similaires à ceux du procédé objet du premier aspect, tel que succinctement exposé ci-dessus, ils ne sont pas rappelés ici.

Selon un quinzième aspect, la présente invention vise un procédé de sécurisation de transfert de données, caractérisé en ce qu'il comporte :
- une étape de tentative de transmission d'un document depuis un émetteur de document à destination d'au moins un destinataire de document, en mettant en oeuvre au moins un attribut de transmission et
- pour au moins une étape de tentative de transmission, une étape d'évaluation de valeur d'au moins un attribut de transmission et
- une étape de mise à disposition de l'émetteur, de l'évaluation de la valeur de l'attribut de transmission.

Grâce à ces dispositions, l'émetteur peut estimer la qualité de service ou le risque pour la prochaine tentative de transmission audit destinataire. Par exemple, l'émetteur peut estimer la valeur d'une adresse électronique, la fiabilité du service de réception de documents du destinataire et décider de modifier la manière dont il transmettra de nouveaux documents à ce destinataire.

Selon des caractéristiques particulières, au cours de l'étape d'évaluation, l'évaluation est fonction des anomalies de correspondance observées pour chaque tentative de transmission.

Selon des caractéristiques particulières, au cours de l'étape d'évaluation, l'évaluation est, en outre, fonction des éléments fournis par le destinataire au cours d'une étape d'inscription à un service de transmission électronique de documents.

Selon des caractéristiques particulières, le procédé comporte, en outre, une étape d'évaluation de l'identification de l'émetteur dudit document et, lors de l'accès au document par le destinataire, une étape de fourniture, au destinataire de l'évaluation de l'identification de l'émetteur.

Selon des caractéristiques particulières, le procédé tel que succinctement exposé ci-dessus comporte :
- une étape de mise en mémoire d'une copie du document dans une première mémoire accessible par l'émetteur du document mais pas accessible par un destinataire du document,
- pour chaque destinataire du document, une étape de mise en mémoire d'une copie du document dans une deuxième mémoire accessible par ledit destinataire du document mais pas accessible par l'émetteur du document et
- une étape de transmission à chaque destinataire du document, d'une information représentative de l'existence d'une copie du document à sa disposition dans une dite deuxième mémoire.

Grâce à ces dispositions, chacun, de l'émetteur et du destinataire, dispose d'une mémoire où sont archivés les documents dont ils ont été, respectivement, émetteur et destinataire. Chacun d'eux dispose donc d'un original et peut le faire archiver en un lieu de son choix, sans risquer d'interférer avec l'autre original.

Ainsi, s'il existe une rupture de correspondance entre deux prestations, ou à l'intérieur même d'une opération en partie double, l'erreur sera détectée et réparée.

Selon des caractéristiques particulières, au cours de ladite étape d'authentification du destinataire, on constitue un accusé de réception et ledit procédé comporte une étape de mise en mémoire, dans chacune des première et deuxième mémoires, dudit accusé de réception en relation avec une copie dudit document.

Grâce à ces dispositions, les deux parties à la correspondance peuvent vérifier la date de remise de la copie du document au destinataire et s'assurer de cette remise de copie.

Selon des caractéristiques particulières, au cours d'une étape de création du document, on attribue audit document des attributs représentatifs de conditions d'authentification du destinataire.

Grâce à ces dispositions, les conditions de remise d'une copie du document au destinataire du document sont associés et document et limitent un risque d'erreur de remise sans l'authentification demandée par l'émetteur du document.

Selon des caractéristiques particulières, le procédé tel que succinctement exposé ci-dessus comporte :
- une étape de mémorisation du document et de l'identification de chaque destinataire,
- une étape de transmission électronique, à au moins une adresse électronique de chaque destinataire du document, d'une information représentative de l'existence du document à sa disposition,
- pour au moins un destinataire du document, une étape de détermination si la durée écoulée depuis l'étape de transmission électronique et avant la réception du document, par ledit destinataire du document, est supérieure à une durée prédéterminée et
- si, pour ledit destinataire du document, la durée écoulée depuis l'étape de transmission électronique et avant la réception du document, par ledit destinataire du document, est supérieure à une durée prédéterminée, une étape d'impression dudit document et de transmission du document imprimé, à une adresse postale dudit destinataire.

Grâce à ces dispositions, l'émetteur du document peut être assuré que le destinataire du document sera informé de l'existence du document à son intention, soit par l'intermédiaire d'une adresse électronique, soit par l'intermédiaire d'une adresse postale. Les risques de non-transmission liés aux difficultés d'accès du destinataire aux messages transmis à une de ses adresses électroniques (par exemple boîte aux lettres électronique saturée, panne de l'hébergeur de cette adresse électronique, obsolescence de l'adresse électronique) sont ainsi réduits.

Selon des caractéristiques particulières, le procédé tel que succinctement exposé ci-dessus comporte :
- une étape d'identification dite « faible » d'un utilisateur au cours de laquelle ledit utilisateur fournit une ou plusieurs adresses électroniques,
- une étape de transmission de message depuis ledit utilisateur ou vers ledit utilisateur, en mettant en oeuvre ladite première identification,
- une étape d'identification dite « forte » d'un utilisateur, au cours de laquelle ledit utilisateur fournit une preuve de son identité et on lui attribut une paire de clés asymétriques et
- une étape de transmission de messages, depuis ledit utilisateur ou vers ledit utilisateur, en mettant en oeuvre ladite paire de clés asymétriques.

Grâce à ces dispositions, un utilisateur peut s'accoutumer à l'utilisation d'une signature électronique et transmettre ou recevoir des messages confidentiels faiblement sécurisés, puis passer à un niveau d'authentification forte dans lequel son identité est garantie à ses interlocuteurs.

Selon des caractéristiques particulières, le procédé tel que succinctement exposé ci-dessus comporte :
- une étape d'affectation de valeurs d'attributs de confiances à un processus de transfert de données depuis un émetteur de document à un destinataire de document,
- une étape d'édition d'un document, par un émetteur de document, au cours de laquelle l'émetteur de document définit au moins un destinataire et des valeurs d'attributs de confiance requises pour la transmission dudit document et
- pour chaque destinataire pour lequel les valeurs d'attributs de confiances affectées au processus de transfert de données depuis l'émetteur à ce destinataire sont toutes supérieures aux valeurs requises, une étape de transmission, audit destinataire, dudit document.

Grâce à ces dispositions, l'émetteur d'un document peut choisir le niveau de qualité de service qui doit être associé à la transmission d'un document à un destinataire. Par exemple, un document jugé très important ou très confidentiel ne sera transmis à un destinataire qu'avec une authentification forte de ce destinataire ou que pendant une durée prédéterminée alors qu'un document jugé de moindre importance ou de moindre confidentialité, par exemple une copie de document important transmis, pour information, à un tiers, sera remis à son destinataire avec une moins stricte authentification de ce destinataire ou pendant une durée plus longue.

Selon un seizième aspect, la présente invention vise un dispositif de sécurisation de transfert de données, caractérisé en ce qu'il comporte :
- un moyen pour effectuer une tentative de transmission d'un document depuis un émetteur de document à destination d'au moins un destinataire de document, en mettant en oeuvre au moins un attribut de transmission et
- pour au moins une étape de tentative de transmission, un moyen d'évaluation adapté à évaluer une valeur d'au moins un attribut de transmission et
- un moyen de mise à disposition de l'émetteur, de l'évaluation de la valeur de l'attribut de transmission.

Les avantages, buts et caractéristiques de ce dispositif étant similaires à ceux du procédé objet du quinzième aspect, tel que succinctement exposé ci-dessus, ils ne sont pas rappelés ici.

Selon un dix-septième aspect, la présente invention vise un procédé de sécurisation de transfert de données, caractérisé en ce qu'il comporte :
- une étape d'identification dite « faible » d'un utilisateur au cours de laquelle ledit utilisateur fournit une ou plusieurs adresses électroniques,
- une étape de transmission de message depuis ledit utilisateur ou vers ledit utilisateur, en mettant en oeuvre ladite première identification,
- une étape d'identification dite « forte » d'un utilisateur, au cours de laquelle ledit utilisateur fournit une preuve de son identité et on lui attribue une paire de clés asymétriques et
- une étape de transmission de messages, depuis ledit utilisateur ou vers ledit utilisateur, en mettant en oeuvre ladite paire de clés asymétriques.

Grâce à ces dispositions, un utilisateur peut s'accoutumer à l'utilisation d'une signature électronique et transmettre ou recevoir des messages confidentiels faiblement sécurisés, puis passer à un niveau d'authentification forte dans lequel son identité est plus fortement garantie à ses interlocuteurs.

Selon des caractéristiques particulières, au cours de l'étape d'identification faible, un utilisateur fournit au moins une adresse électronique, téléphonique ou postale.

Selon des caractéristiques particulières, au cours de l'étape d'identification faible, on envoie un mot de passe à une adresse fournie par l'utilisateur.

Selon des caractéristiques particulières, au cours de l'étape d'identification faible, on fournit à l'utilisateur un certificat privé.

Selon des caractéristiques particulières, ledit certificat électronique porte des attributs personnels de l'adhérent.

Selon des caractéristiques particulières, au cours de l'étape d'identification forte, l'utilisateur fournit une signature manuscrite sur un document papier.

Selon des caractéristiques particulières, au cours de l'étape d'identification forte, l'utilisateur fournit une signature qualifiée émise par une autorité de certification.

Selon des caractéristiques particulières, le procédé tel que succinctement exposé ci-dessus comporte une étape de fourniture, par un premier utilisateur, d'une adresse d'un deuxième utilisateur, à inscrire, et, dès que le deuxième utilisateur a procédé à son inscription, une étape de transmission, au premier utilisateur, d'un message représentatif de l'inscription du deuxième utilisateur.

Selon des caractéristiques particulières, le procédé tel que succinctement exposé ci-dessus comporte :
- une étape de création d'un document par un émetteur de document,
- une étape d'identification d'au moins un destinataire dudit document,
- une étape de mise en mémoire d'une copie du document dans une première mémoire accessible par l'émetteur du document mais pas accessible par un destinataire du document,
- pour chaque destinataire du document, une étape de mise en mémoire d'une copie du document dans une deuxième mémoire accessible par ledit destinataire du document mais pas accessible par l'émetteur du document et
- une étape de transmission à chaque destinataire du document, d'une information représentative de l'existence d'une copie du document à sa disposition dans une dite deuxième mémoire.

Grâce à ces dispositions, chacun, de l'émetteur et du destinataire, dispose d'une mémoire où sont archivés les documents dont ils ont été, respectivement, émetteur et destinataire. Chacun d'eux dispose donc d'un original et peut le faire archiver en un lieu de son choix, sans risquer d'interférer avec l'autre original.

Ainsi, s'il existe une rupture de correspondance entre deux prestations, ou à l'intérieur même d'une opération en partie double, l'erreur sera détectée et réparée.

Selon des caractéristiques particulières, le procédé tel que succinctement exposé ci-dessus comporte une étape d'horodatage de chaque étape de mise en mémoire d'une copie du document.

Grâce à ces dispositions, chaque partie à la correspondance peut vérifier la date de mise en mémoire de la copie du document dans la mémoire qui lui est réservée.

Selon des caractéristiques particulières, le procédé tel que succinctement exposé ci-dessus comporte une étape d'authentification du destinataire et, en cas d'authentification positive, une étape d'accès, par ledit destinataire, à la copie du document disponible dans la deuxième mémoire.

Grâce à ces dispositions, l'émetteur du document peut imposer une authentification du destinataire avant que ce dernier prenne connaissance du document qui lui est destiné. En particulier, l'émetteur du document peut faire valoir cette authentification en cas de contestation ultérieure de la remise du document au destinataire.

Selon des caractéristiques particulières, au cours de ladite étape d'authentification du destinataire, on constitue un accusé de réception et ledit procédé comporte une étape de mise en mémoire, dans chacune des première et deuxième mémoires, dudit accusé de réception en relation avec une copie dudit document.

Grâce à ces dispositions, les deux parties à la correspondance peuvent vérifier la date de remise de la copie du document au destinataire et s'assurer de cette remise de copie.

Selon des caractéristiques particulières, les première et deuxième mémoires se trouvent dans le même centre de données.

Grâce à ces dispositions, les étapes de mise en mémoire peuvent être également sécurisées.

Selon des caractéristiques particulières, le procédé tel que succinctement exposé ci-dessus comporte une étape de transmission, à une troisième mémoire distante, d'une copie du document.

Grâce à ces dispositions, un tiers, par exemple un huissier, peut effectuer un séquestre de la copie du document et se porter garant du contenu du document créé par l'émetteur du document.

Selon des caractéristiques particulières, le procédé tel que succinctement exposé ci-dessus comporte une étape de création d'un document à transmettre d'un émetteur de document à un destinataire du document, au cours de laquelle l'émetteur du document sélectionne un niveau de signature, faible ou forte, nécessaire à la réception dudit document par le destinataire du document et, lors d'une tentative d'accès audit document par le destinataire, on effectue une authentification du destinataire mettant en oeuvre la signature de niveau nécessaire défini par l'émetteur du document.

Grâce à ces dispositions, les conditions de remise d'une copie du document au destinataire du document sont associés et document et limitent un risque d'erreur de remise sans l'authentification demandée par l'émetteur du document.

Selon des caractéristiques particulières, préliminairement à l'étape de création d'un document, on effectue une étape d'authentification de l'émetteur du document.

Grâce à ces dispositions, le destinataire d'un document peut être assuré de l'identité de l'émetteur de ce document.

Selon des caractéristiques particulières, le procédé tel que succinctement exposé ci-dessus comporte une étape d'association au document d'un certificat d'intégrité rendant détectable toute modification ultérieure dudit document, ledit certificat d'intégrité étant mémorisé, dans les première et deuxième mémoires, en relation avec les copies dudit document.

Grâce à ces dispositions, chaque partie à la correspondance peut vérifier que le document n'a pas été modifié entre sa création et sa remise au destinataire ou sa consultation ultérieure.

Selon des caractéristiques particulières, le procédé tel que succinctement exposé ci-dessus comporte :
- une étape de création d'un document par un émetteur de document,
- une étape d'identification d'au moins un destinataire dudit document, ladite identification comportant la détermination d'au moins une adresse électronique dudit destinataire et d'au moins une adresse postale dudit destinataire,
- une étape de mémorisation du document et de l'identification de chaque destinataire,
- une étape de transmission électronique, à au moins une adresse électronique de chaque destinataire du document, d'une information représentative de l'existence du document à sa disposition,
- pour au moins un destinataire du document, une étape de détermination si la durée écoulée depuis l'étape de transmission électronique et avant la réception du document, par ledit destinataire du document, est supérieure à une durée prédéterminée et
- si, pour ledit destinataire du document, la durée écoulée depuis l'étape de transmission électronique et avant la réception du document, par ledit destinataire du document, est supérieure à une durée prédéterminée, une étape d'impression dudit document et de transmission du document imprimé, à une adresse postale dudit destinataire.

Grâce à ces dispositions, l'émetteur du document peut être assuré que le destinataire du document sera informé de l'existence du document à son intention, soit par l'intermédiaire d'une adresse électronique, soit par l'intermédiaire d'une adresse postale. Les risques de non-transmission liés aux difficultés d'accès du destinataire aux messages transmis à une de ses adresses électroniques (par exemple boîte aux lettres électronique saturée, panne de l'hébergeur de cette adresse électronique, obsolescence de l'adresse électronique) sont ainsi réduits.

Selon des caractéristiques particulières, le procédé tel que succinctement exposé ci-dessus comporte :
- une étape de tentative de transmission d'un document depuis un émetteur de document à destination d'au moins un destinataire de document, en mettant en oeuvre au moins un attribut de transmission et
- pour au moins une étape de tentative de transmission, une étape d'évaluation de valeur d'au moins un attribut de transmission et
- une étape de mise à disposition de l'émetteur, de l'évaluation de la valeur de l'attribut de transmission.

Grâce à ces dispositions, l'émetteur peut estimer la qualité de service ou le risque pour la prochaine tentative de transmission audit destinataire. Par exemple, l'émetteur peut estimer la valeur d'une adresse électronique, la fiabilité du service de réception de documents du destinataire et décider de modifier la manière dont il transmettra de nouveaux documents à ce destinataire.

Selon des caractéristiques particulières, le procédé tel que succinctement exposé ci-dessus comporte :
- une étape d'affectation de valeurs d'attributs de confiances à un processus de transfert de données depuis un émetteur de document à un destinataire de document,
- une étape d'édition d'un document, par un émetteur de document, au cours de laquelle l'émetteur de document définit au moins un destinataire et des valeurs d'attributs de confiance requises pour la transmission dudit document et
- pour chaque destinataire pour lequel les valeurs d'attributs de confiances affectées au processus de transfert de données depuis l'émetteur à ce destinataire sont toutes supérieures aux valeurs requises, une étape de transmission, audit destinataire, dudit document.

Grâce à ces dispositions, l'émetteur d'un document peut choisir le niveau de qualité de service qui doit être associé à la transmission d'un document à un destinataire. Par exemple, un document jugé très important ou très confidentiel ne sera transmis à un destinataire qu'avec une authentification forte de ce destinataire ou que pendant une durée prédéterminée alors qu'un document jugé de moindre importance ou de moindre confidentialité, par exemple une copie de document important transmis, pour information, à un tiers, sera remis à son destinataire avec une moins stricte authentification de ce destinataire ou pendant une durée plus longue.

Selon un dix-huitième aspect, la présente invention vise un dispositif de sécurisation de transfert de données, caractérisé en ce qu'il comporte :
- un moyen d'identification dite « faible » d'un utilisateur au cours de laquelle ledit utilisateur fournit une ou plusieurs adresses électroniques,
- un moyen de transmission de message depuis ledit utilisateur ou vers ledit utilisateur, en mettant en oeuvre ladite première identification,
- un moyen d'identification dite « forte » d'un utilisateur, au cours de laquelle ledit utilisateur fournit une preuve de son identité et on lui attribue une paire de clés asymétriques et
- un moyen de transmission de messages, depuis ledit utilisateur ou vers ledit utilisateur, en mettant en oeuvre ladite paire de clés asymétriques.

Les avantages, buts et caractéristiques de ce dispositif étant similaires à ceux du procédé objet du dix-septième aspect, tel que succinctement exposé ci-dessus, ils ne sont pas rappelés ici.

Les différents aspects de la présente invention sont destinés à être combinés pour former une solution complète de sécurisation de documents et/ou de messages communiqués entre des personnes et/ou des systèmes informatiques. En particulier, les caractéristiques essentielles et particulières de chacun des aspects de la présente invention forment des caractéristiques particulières, ou formes avantageuses, des autres aspects de la présente invention.

D'autres avantages, buts et caractéristiques de la présente invention ressortiront de la description qui va suivre faite, dans un but explicatif et nullement limitatif, en regard des dessins annexés dans lesquels :
- la figure 1 représente, schématiquement, sous forme d'un schéma fonctionnel, un mode de réalisation particulier du dispositif objet de la présente invention,
- les figures 2A et 2B représentent, sous forme d'un logigramme, des étapes mises en oeuvre lors de l'inscription d'un utilisateur aux services offerts en mettant en oeuvre un mode particulier de réalisation de la présente invention,
- les figures 3A et 3B représentent, sous forme d'un schéma fonctionnel, les fonctions mises en oeuvre pour une transmission de document électronique recommandé et
- la figure 4 représente, sous forme d'un logigramme, des étapes mises en oeuvre pour l'évaluation de valeurs d'attributs de confiance personnels dynamiques.

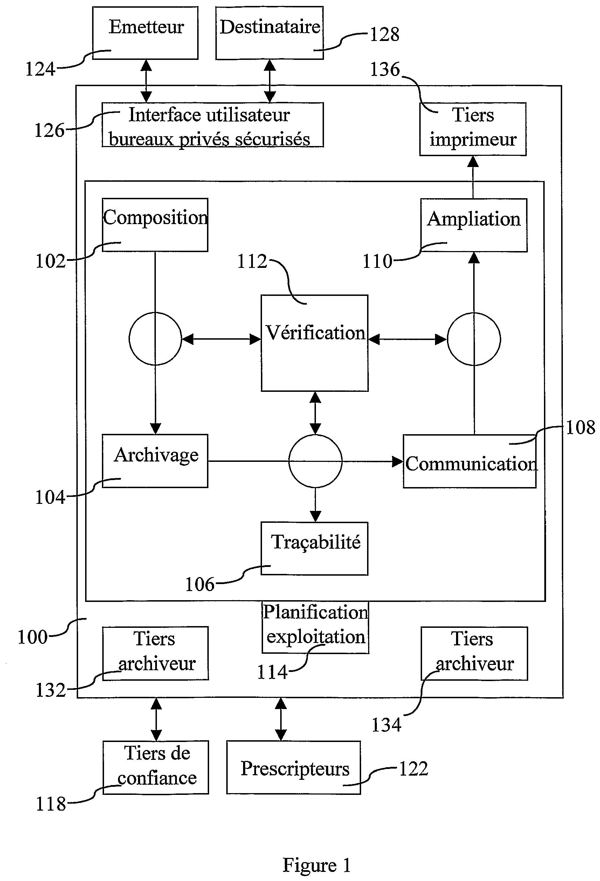

On observe, en figure 1, un service de sécurisation de transfert de données 100 comportant un service de composition de document 102, un service de conservation 104, un service de traçabilité 106, un service de communication 108, un service d'ampliation 110, un service de vérification 112, un service de planification 114 et un service d'exploitation 116. On observe aussi, en figure 1, un réseau 118 de tiers de confiance exploitant des bureaux d'enregistrement 120, un réseau 122 de tiers de confiance, un émetteur 124 connecté à un bureau privé sécurisé 126, un destinataire 128 connecté à un bureau privé sécurisé 130, un tiers archiveur d'émetteur 132, un tiers archiveur de destinataire 134 et un tiers imprimeur 136.

Le service de sécurisation de transfert de données 100 implémente chacun des aspects de la présente invention. Le service de composition de document 102 conserve des modèles ou masques de documents munis d'attributs, génériques pour tous les utilisateurs ou spécifiques pour les utilisateurs ayant fourni de tels modèles de documents ainsi que leur attributs. Ces attributs peuvent être affectés aux modèles de document par l'intermédiaire d'une interface utilisateur graphique (non représentée) dans laquelle des menus et des aides contextuelles permettent à l'utilisateur de choisir les attributs du modèle selon leur signification et leurs effets. Ces attributs, dits « de confiance », qui sont décrits plus bas, concernent, les identités des émetteurs et/ou destinataires de documents, les tâches ou ordonnancement des tâches, le contrôle et la validation des traitements effectués sur les documents issus de ces modèles et/ou le niveau de sécurité requis pour le document.

Lors de la composition d'un document à partir d'un modèle, l'utilisateur émetteur sélectionne un modèle, fournit les données pour documenter le modèle, en particulier au moins une identification du destinataire, une adresse électronique et, préférentiellement, une adresse postale du destinataire, si ces éléments ne sont pas déjà présents dans le modèle de document, ainsi que le message à transmettre au destinataire, par exemple les éléments d'une facture, d'un contrat, d'une convocation.

L'utilisateur émetteur peut aussi, lors de cette composition de document, modifier et compléter les attributs du modèle de document pour constituer des attributs du document à transmettre, par exemple sa date de remise au destinataire sous forme électronique, sa date de remise sous forme postale en cas d'échec de la remise sous forme électronique, sa date de fin de remise au destinataire sous forme électronique, le niveau d'authentification du destinataire nécessaire pour le document.

On observe que la composition de document, un système automatique, par exemple un ordinateur de l'utilisateur émetteur peut fournir les éléments nécessaires à la composition, par exemple sous forme d'un fichier de tableur comportant ces éléments, de manière ordonnée.

On observe que, lors d'une même session de composition de document, une pluralité de documents peuvent être composés manuellement ou automatiquement.

Lorsque le document est prêt à être transmis, l'utilisateur émetteur valide sa transmission au destinataire.

Le service de conservation 104 conserve tout document composé dans une mémoire non volatile dont l'accès est réservé à l'émetteur du document. Les conditions d'accès à cette mémoire sont définies avec l'utilisateur émetteur, selon des techniques connues, par exemple sous réserve de fourniture d'un nom d'utilisateur (en anglais « login ») et d'un mot de passe, ou sous réserve d'une authentification électronique. On observe que l'utilisateur émetteur peut mandater un tiers archiveur 132 pour venir automatiquement copier chaque document qu'il a composé. Le service de conservation 104 affecte chaque document qu'il reçoit d'un horodatage sécurisé.

Le service de traçabilité 106 garantit la traçabilité des différentes étapes effectuées sur un document. A cet effet, il calcule un certificat d'intégrité sur la base du document composé de telle manière que le certificat d'intégrité permette de détecter toute modification du document composé. Par exemple, le certificat d'intégrité est basé sur une fonction de hashage (en anglais « hash ») qui fournit un condensât. Le certificat d'intégrité est, d'une part, associé, par le service de conservation 104, au document mis en mémoire et, d'autre part, associé à une identification du document composé, par exemple une identification de l'utilisateur émetteur, de l'utilisateur destinataire et de l'horodatage de la fin de la composition du document, ces éléments étant conservés par un tiers de confiance, par exemple un huissier de justice.

Le service de communication 108 effectue une copie du document à transmettre au destinataire dans une mémoire non volatile uniquement accessible par ce destinataire, sous réserve du respect des conditions d'accès définies par les attributs de confiance du document, avec horodatage de la copie. Après l'accès par le destinataire, un tiers archiveur 134 mandaté par ce destinataire peut accéder à la copie du document et le copier.

Le service d'ampliation 110 effectue le choix du canal de communication avec le destinataire (par exemple par courrier électronique, minimessage, télécopie ou courrier postal) et la communication au destinataire d'au moins un message l'avertissant de la présence d'un document à son attention. Cette communication s'effectue, préférentiellement, en plusieurs étapes dont l'ordonnancement est défini par les attributs du document à transmettre. Généralement, cette communication commence, à une date définie par l'émetteur et représentée par au moins un attribut du document, sous forme d'un message électronique envoyé à une adresse électronique du destinataire. Par exemple, ce message électronique prend la forme d'un courrier électronique envoyé à l'adresse de courrier électronique (dite « adresse email ») ou d'un minimessage SMS (acronyme de « Short Message System » pour système à message court) envoyé à l'adresse téléphonique (c'est-à-dire au numéro de téléphone, généralement mobile) du destinataire.

Les attributs du document peuvent prévoir qu'à défaut d'accès, par le destinataire, dans un délai défini par au moins un attribut du document, au document qui lui est destiné et qui est conservé par le service de communication 108, qui en avertit alors le service d'ampliation 108, au moins un autre message soit transmis au destinataire, par le service de communication 108. A défaut d'accès, par le destinataire, dans un deuxième délai défini par au moins un attribut du document qui lui est destiné ou dès la fin du deuxième délai, selon les consignes de l'utilisateur émetteur représentées par les attributs de ce document, le service d'ampliation 110 transmet le document au tiers imprimeur 136 en vue de la transmission du document sous forme de courrier postal avec ou sans demande d'avis, ou accusé, de réception.

Le service de vérification 112 vérifie, lors de chaque communication entre deux services que l'ensemble des procédures nécessaires ont été correctement effectuées, et que l'ensemble des informations (modèle de document, information variable du document, attributs du document, horodatage, bonne réception par le service destinataire et accusé de réception transmis au service émetteur, par exemple) concernées par ces procédures sont suffisantes et ont bien été traitées. Chaque vérification effectuée par le service de vérification 112 donne lieu à un compte-rendu transmis au service de traçabilité 106, en vue de sa traçabilité.

Le service de planification 114 ordonnance l'ensemble des tâches effectuées par les différents services, certaines de ces tâches étant, on l'a vu, paramétrées en fonction des attributs associés aux documents.

Le service d'exploitation 116 ordonnance les opérations effectuées sur chaque document et, en particulier les appels aux services externes, par exemple les tiers archiveurs, d'authentification, de traçabilité, imprimeur, fournisseurs d'horodatage.

Les réseaux 118 et 122 de tiers de confiance exploitant des bureaux d'enregistrement 120, ou non respectivement, fournissent les données nécessaires à la vérification de la validité de certificats d'authentification d'utilisateurs ou de tiers, selon des techniques connues en soi, notamment en relation avec l'infrastructure à clés publiques connue sous le nom de PKI (acronyme de « public key infrastructure » pour infrastructure à clés publique).

Les bureaux d'enregistrement sont des organes du tiers de confiance. Ils assurent les relevés et l'actualisation des états civils avec les objets numériques personnels pour la composition, transmission et conservation légale des documents ou fichiers structurés. Chaque bureau d'enregistrement s'engage à protéger ces attributs de confiance ainsi que leur confidentialité. Avec son bureau d' enregistrement, le tiers de confiance assure ensuite l'authentification forte personnelle des utilisateurs et l'usage des objets numériques confiés pendant un instant, dit « instant de production » aux prestataires de services choisis par chaque utilisateur émetteur. Il assure un contrôle du résultat de l'opération réalisée par le prestataire ou opérateur de gestion documentaire, et, à cette occasion, il vérifie la restitution des attributs ou des objets de confiance qui ne peuvent être conservés que par le tiers de confiance.

L'utilisateur émetteur 124 et l'utilisateur destinataire 128 sont connectés à leur bureau privé sécurisé 126 et 130, respectivement, ces bureaux étant virtuels et mis en oeuvre, à distance avec des moyens d'accès sécurisés (par exemple, par saisie de nom d'utilisateur et de mot de passe, utilisation de clés transmises sur téléphone mobile ou authentification forte, selon les variantes ou les modes de fonctionnement choisis par les clients ou imposés par les procédures et les niveaux des attributs affectés aux documents).

Le tiers imprimeur 136 effectue l'impression du document à transmettre par voie postale et sa mise sous pli ainsi que la remise aux services postaux, avec ou sans demande d'avis de réception (ce dernier étant directement retourné à l'utilisateur émetteur).

Préférentiellement, lors de son inscription, un utilisateur fournit des éléments d'identification (nom, prénom, adresse électroniques, adresse téléphonique, adresse postale) et se voit attribuer un nom d'utilisateur (en anglais « login ») et un mot de passe. Pour l'authentifier, on lui envoie, à son adresse téléphonique, un mot de passe, par exemple aléatoire ou dépendant des éléments qu'il a fournit, l'utilisateur devant saisir ce mot de passe sur son bureau virtuel privé pour confirmer son inscription, ce qui a pour effet que son adresse téléphonique est vérifiée. Puis l'utilisateur accepte une convention de preuve indiquant le niveau d'authentification qu'il souhaite avoir lors de ses accès à son bureau privé virtuel.

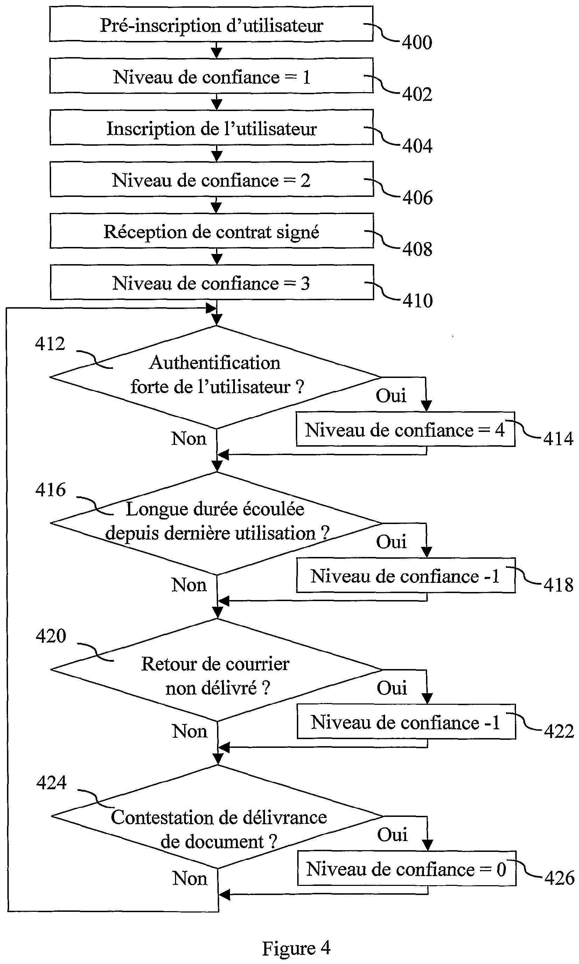

Des exemples d'attributs de confiance pouvant être affectés à un document et pouvant être mis en oeuvre dans les différents services illustrés en figure 1 sont donnés ci-dessous.
- l'identité numérique (aussi appelé « login »), attribut d'identification, servant pour la composition,
- le mot de passe ou certificat d'authentification, attribut d'identification, servant pour la composition,
- le formulaire et/ou fichier structuré, attribut de tâche ou d'ordonnancement, servant pour la composition,
- la procédure interne et/ou les mentions complémentaires, attribut de contrôle et/ou validation, servant pour la composition,
- la procédure externe et/ou mention obligatoire, attribut de contrôle et/ou validation, servant pour la composition, la dématérialisation et la communication,
- l'habilitation, attribut d'identification, servant pour la composition et la communication,
- le code secret et/ou la procuration , attribut d'identification, servant pour la dématérialisation,
- le fichier partenaire (destinataire) comportant les adresses d'un destinataire, attribut d'identification, servant pour la composition, la dématérialisation et l'ampliation,
- le carnet d'adresses de notification comportant les adresses des destinataires, attribut d'identification, servant pour la composition, la communication et l'ampliation,
- le compte courant de correspondance, attribut d'identification, servant pour la dématérialisation,
- le numéro du coffre-fort électronique, attribut d'identification, servant pour la dématérialisation,
- la notation de l'identité numérique en fonction de la déclaration en ligne et des documents justificatifs ou des attestations papiers retournées au bureau d'enregistrement (carte d'identité, chèque barré...) avec la mention «certifié conforme à l'original ». La notation d'origine devient dynamique car elle varie en fonction de la constitution du dossier personnel, de son évolution, et de la qualité des échanges effectuées, comme exposé en regard de la figure 4. Les échecs à la correspondance, comme les retours « n'habite pas à l'adresse indiquée », peuvent ainsi dégrader la crédibilité du domicile légal ou de la résidence principale retenue dans l'état civil et dans le carnet d'adresses ou fichier partenaires de l'utilisateur émetteur,
- l'autorité de certification publique, attributs d'identification, servant pour la dématérialisation,
- l'horodatage, servant pour la composition, la dématérialisation, la communication et l'ampliation et
- le type de document, pouvant prendre l'une des significations suivantes : confidentiel, critique, recommandé avec avis de réception ou simple.

Parmi les tiers dont les services ne sont pas représentés en figure 1, préférentiellement, ils comportent les trois types suivants, généralement en mode ASP (acronyme de « Application Service Provider » pour fournisseur de service applicatifs) :
- le CRM (acronyme de « customer relationship management » pour gestionnaire de relation client) qui fournit une évaluation de la confiance que l'on peut placer dans un utilisateur,
- le CPM (acronyme de « commercial paper management » pour gestionnaire de documents commerciaux) qui effectue l'affacturage, le virement commercial ou la titrisation.
- le TRM (acronyme de « treasury relationship management » pour gestionnaire de relations de trésorerie) qui assure les fonctions de « bons à payer » et peut être connecté à un serveur de proximité spécialisé dans les transferts sans mouvements de fonds pour le règlement des factures et des avoirs entiers avec une notification aux trésoriers des personnes morales, des balances de leurs échanges.

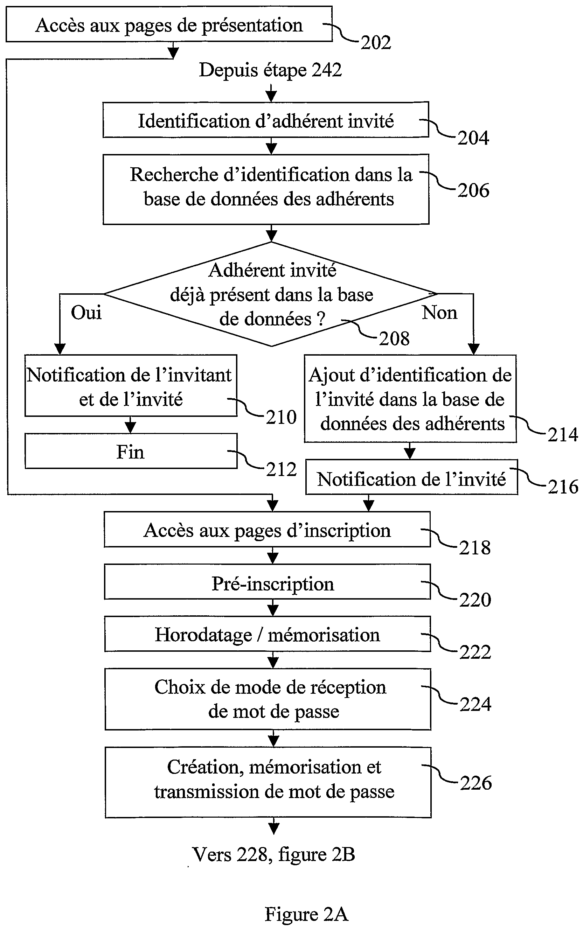

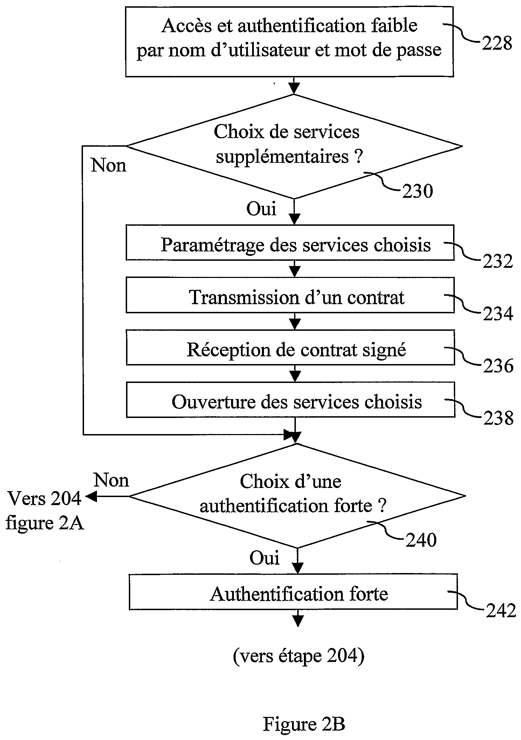

Les figures 2A et 2B illustrent des étapes suivies pour l'inscription d'utilisateurs aux services de communication sécurisée mettant en oeuvre les différents aspects de la présente invention. On observe, en figure 2A, une étape 202 au cours de laquelle un utilisateur non encore adhérent accède à une information de description de l'offre de service, par exemple sur un site de la toile. S'il décide de devenir adhérent d'un des services proposés, il passe à l'étape 218.

Pour des utilisateurs invités, au cours d'une étape 204, un utilisateur déjà adhérent fournit une identification d'un adhérent invité auquel il souhaite faire parvenir des documents sécurisés. Cette identification comporte au moins une adresse électronique de l'adhérent invité. Au cours d'une étape 206, l'identification de l'adhérent invité est comparée aux identifications d'adhérents déjà répertoriés dans la base de données des adhérents pour vérifier qu'il n'est pas déjà adhérent.

Au cours d'une étape 208, on détermine si l'adhérent invité est déjà référencé dans la base de données des utilisateurs.

Si l'utilisateur invité est déjà adhérent, au cours d'une étape 210, on notifie cette état d'adhérent à l'utilisateur invitant et on notifie à l'utilisateur invité que l'invitant à souhaité l'inscrire. La phase d'inscription de l'utilisateur invité s'achève alors à l'étape 212.

Si l'utilisateur invité n'est pas déjà adhérent, au cours d'une étape 214, son identification est ajoutée dans cette base de données et est affectée d'un statut de pré-inscrit et d'une notation minimale correspondant aux adhérents déclarés par des tiers. Puis, au cours d'une étape 216, un courrier électronique est adressé à l'adhérent invité pour lui indiqué quel adhérent l'invite à s'inscrire au service de communication sécurisé, que le service de réception de document est gratuit et à quelle adresse électronique, connue sous le nom d'URL (acronyme d' « universal resource locator » pour localiseur universel de service) il doit se rendre, par exemple en cliquant sur un lien inséré dans le courrier électronique, pour s'inscrire gratuitement au service de communication sécurisé.

Au cours d'une étape 218, le futur adhérent accède au site de la toile (en anglais web) correspondant à cette adresse électronique URL et, au cours d'une étape 220, procède à sa pré-inscription. A cet effet, au cours de l'étape 220, il fournit ou valide son nom, son prénom, sont adresse postale (professionnelle et/ou personnelle), son numéro de téléphone fixe, son numéro de télécopieur, son numéro de téléphone mobile. Il accède, lors de la validation de ces informations, à son numéro d'adhérent et à un contrat d'adhésion, aux conditions générales du service de réception de documents et à son nom d'utilisateur, qu'il peut éventuellement modifier. L'étape 220 est horodatée et les renseignements fournis sont enregistrés dans la base de données d'utilisateurs, au cours d'une étape 222.

Au cours d'une étape 224, le futur utilisateur choisit un mode de réception de son mot de passe, par exemple entre la réception par télécopie, par minimessage ou par courrier postal.

Au cours d'une étape 226, un mot de passe est attribué à l'utilisateur, mis en mémoire dans la base de données d'utilisateurs et transmis à l'utilisateur selon le mode de réception qu'il a choisi avec une invitation à valider son inscription par accès à son bureau privé virtuel sécurisé.

Lors de son accès à ce bureau, le nouvel utilisateur fournit son nom d'utilisateur et le mot de passe qui lui a été transmis, au cours de l'étape 228. Au cours d'une étape 230, l'utilisateur détermine s'il souhaite utiliser d'autres services proposés que la simple réception de documents. Si non, il passe à l'étape 240. S'il souhaite utiliser plus que le service de réception de document, l'utilisateur choisit, au cours d'une étape 232, les paramètres des services qu'il souhaite utiliser. En particulier, l'utilisateur fournit l'identité, les adresses postale et électronique(s) des personnes habilitées, au sein de son organisation, à émettre ou recevoir des documents, des pouvoirs pour ces personnes, les coordonnées du tiers archiveur éventuel qu'il souhaite voir prendre copie des documents émis ou reçus, les moyens de paiement des prestations qu'il souhaite utiliser, les éléments de signature personnelle et les niveaux de signature qu'il peut et souhaite mettre en oeuvre.

Pour toutes ces prestations additionnelles, au cours d'une étape 234, un contrat de prestation écrit est transmis à l'utilisateur par voie électronique et postale, le retour, par voie postale, d'un exemplaire signé lui étant demandé.

Au cours d'une étape 236, le retour de contrat, signé par l'utilisateur, est reçu, vérifié et enregistré et les prestations choisies par l'utilisateur lui deviennent accessibles, à partir d'une étape 238. Puis on passe à l'étape 240, au cours de laquelle le nouvel utilisateur décide s'il souhaite bénéficier d'une authentification forte. Si oui, au cours d'une étape 242 on procède à son authentification forte de manière connue en soi. Si non, ou à la fin de l'étape 242, on accède à l'étape 204 afin que le nouvel utilisateur puisse inviter de nouveaux adhérents.

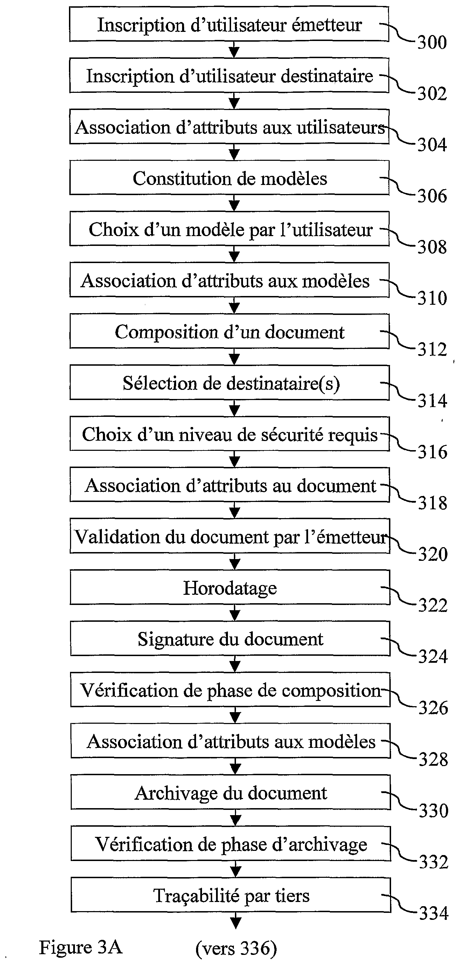

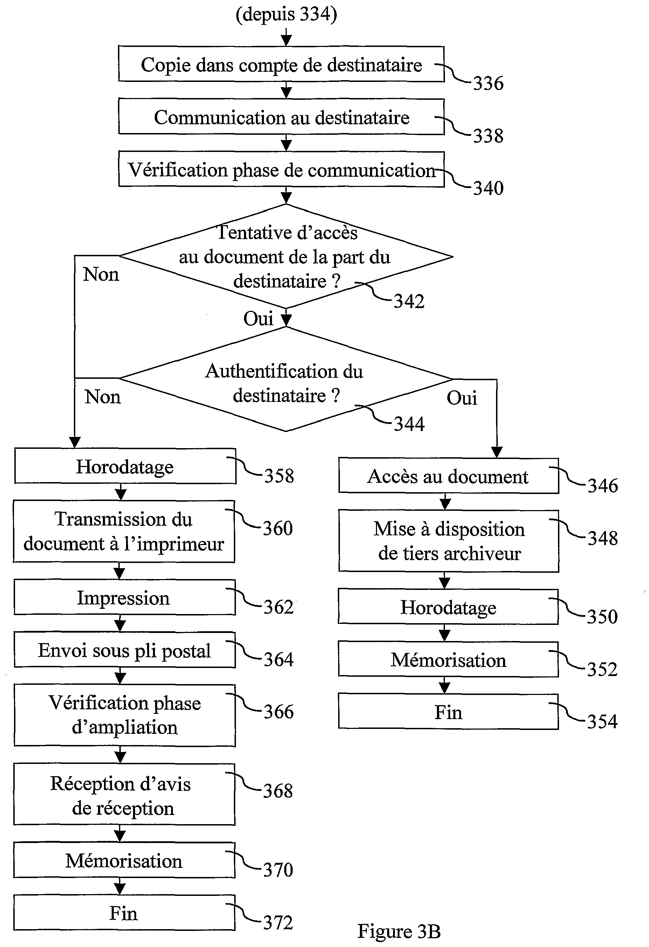

On observe, en figure 3A, qu'après s'être inscrit, au cours d'une étape 300 détaillée en figures 2A et 2B, l'utilisateur disposant des droits d'accès au service d'envoi de documents recommandés peut décider d'envoyer un document à un destinataire. Dans ce cas, après s'être identifié, au cours d'une étape 302, l'utilisateur émetteur d'un document recommandé fournit l'identification du destinataire du document. On note que si ce destinataire n'est pas référencé dans la base de données des utilisateurs du service, on le notifie à l'émetteur et on effectue une étape d'inscription détaillée à partir de l'étape 204, en figures 2A et 2B.

Au cours d'une étape 304, on associe des attributs aux utilisateurs émetteurs et destinataire.

Puis, au cours d'une étape 306, l'utilisateur émetteur peut constituer un modèle de document, étape 306, ou accéder à un modèle de document qui lui correspond, c'est-à-dire un modèle générique disponible pour tous les utilisateurs émetteurs ou un modèle qu'il a fourni et qui a été validé, étape 308. Dans chacun de ces cas, des attributs de document sont associés au modèle de document, au cours d'une étape 310, par défaut et/ou par choix de l'utilisateur.

Au cours d'une étape 312, l'utilisateur émetteur compose le document à transmettre au destinataire, c'est-à-dire qu'il fournit des données additionnelles pour éditer un document. Ensuite, l'utilisateur émetteur choisit un niveau de sécurité requis pour la transmission du document au destinataire, au cours d'une étape 316.

Ces données, documents, conditions de délivrance et coordonnées des utilisateurs émetteurs et destinataire sont affectées d'attributs de confiance attachés au modèle, à l'émetteur et/ou au destinataire, au cours d'une étape 318.

Le document à transmettre est validé par l'utilisateur émetteur, au cours d'une tape 320 et la fin de la composition du document est horodatée, au cours d'une étape 322. Ensuite, le document est signé par l'utilisateur émetteur au cours d'une étape 324.

Puis, le document composé et signé passe par une fonction de validation de son contenu, des procédures de composition et des attributs attachés, au cours d'une étape 326. Si cette vérification est négative, l'utilisateur émetteur est averti du problème et une alerte est transmise au gestionnaire des services.

Si la vérification de la composition est positive, un numéro de pli et un code à barres, uniques sont affectés au document composé au cours de l'étape 326. Puis, au cours dune étape 328, le document composé, signé et vérifié est transmis, avec ses informations et attributs attachés, au coffre-fort électronique de l'émetteur, étape 330.

Au cours d'une étape 332, les procédures suivies pendant la phase d'archivage et leurs résultats sont vérifiés.

Au cours d'une étape 334, un dépôt légal du document et des pièces attachées est effectué auprès d'un tiers, par exemple un huissier, qui retourne un numéro de dépôt légal.

Au cours d'une étape 336, une copie du document archivé dans le coffre-fort électronique de l'émetteur est archivée dans une mémoire à la seule disposition du destinataire, mémoire appelée « compte courant ».

Un message est ensuite transmis au destinataire, immédiatement ou à la date choisie par l'émetteur, par le canal que le destinataire a choisi, pour l'avertir de la présence d'un document à son attention et un message est transmis par courrier électronique, à l'émetteur pour l'informer de la mise à disposition du document au destinataire, au cours d'une étape 338.

Au cours d'une étape 340, on effectue la vérification de la procédure et des résultats de l'étape de communication.

Si le destinataire tente d'accède au document, pendant un délai prédéterminé, étape 342, on authentifie le destinataire, étape 344. Si à la fin du délai prédéterminé le destinataire n'a pas tenté d'accéder au document ou si son authentification a échoué, on passe à une étape 358.

En revanche, si, avant la fin du délai prédéterminé, le destinataire a tenté d'accéder au document et a été authentifié, au cours d'une étape 346, le destinataire accède au document et celui-ci est mis à disposition d'un tiers archiveur du choix du destinataire, étape 348.

L'accès au document est horodaté au cours d'une étape 350 et mémorisé au cours d'une étape 352, la procédure de transmission du document s'achevant alors à l'étape 352.

Au cours de l'étape 358, on horodate la fin du délai prédéterminé et, au cours d'une étape 360, on transmet le document à un imprimeur. L'imprimeur effectue l'impression, étape 362 et l'envoi sous pli postal 364, en tenant compte de l'éventuelle demande d'avis de réception exprimée par l'émetteur.

Au cours d'une étape 366, on vérifie les procédures suivies et les résultats de la phase d'ampliation.

Lors de la réception de l'avis de réception ou de la notification de non-délivrance du document par les services postaux, au cas où ceux-ci sont retournés au prestataire de services, cet événement est horodaté, étape 368 et mémorisé, étape 370, la procédure s'achevant alors à l'étape 372.

Toutes les étapes de mémorisation exposées ci-dessus sont réalisées dans le coffre-fort de l'émetteur, dans le compte-courant du destinataire et auprès du tiers assurant la traçabilité des étapes de transmission du document. Préférentiellement, l'accusé de réception fait, lui aussi, l'objet d'un dépôt légal qui est notifié à la fois à l'émetteur et au destinataire.

En variante, l'accusé de réception papier est directement retourné, par les services postaux, à l'émetteur du document.

On observe, en figure 4 que, après l'étape de pré-inscription d'un utilisateur, étape 400, l'attribut représentant le niveau de confiance lié à cet utilisateur prend la valeur de 1, étape 402. Après l'étape d'inscription de l'utilisateur, étape 404, le niveau de confiance prend la valeur de 2, étape 406. A réception du contrat de service signé par l'utilisateur, étape 408, le niveau de confiance prend la valeur de 3, étape 410.

On détermine alors si l'utilisateur effectue une étape de fourniture d'une authentification électronique forte, au cours d'une étape 412. Si oui, le niveau de confiance associé à l'utilisateur prend la valeur de 4 au cours d'une étape 414. Sinon ou à la fin de l'étape 414, au cours d'une étape 416, on détermine si une longue durée, par exemple supérieure à trois mois, s'est écoulée depuis la dernière utilisation des services par l'utilisateur. Si c'est le cas, au cours d'une étape 418, on décrémente de 1 le niveau de confiance associé à cet utilisateur, étant à noter que chaque nouvelle utilisation du service par l'utilisateur restaure son niveau de confiance antérieur.

Sinon ou à la fin de l'étape 418, au cours d'une étape 420, on détermine si un courrier postal qui lui a été acheminé n'a pas été délivré au destinataire. Si c'est le cas, au cours d'une étape 422, on décrémente de 1 le niveau de confiance associé à l'utilisateur.

Sinon ou à la fin de l'étape 422, au cours d'une étape 424, on détermine si l'utilisateur a contesté la délivrance d'un document. Si oui, le niveau de confiance associé à l'utilisateur prend la valeur « 0 ». Sinon, ou à la fin de l'étape 426, on retourne à l'étape 412.

Comme on le comprend en regard de la figure 4, chaque utilisateur se voit attribuer un niveau de confiance dynamique, qui évolue au cours du temps, selon les événements qui affectent ses relations avec les services proposés.

Ce niveau de confiance associé à un destinataire potentiel d'un document est utilisé pour aider l'utilisateur émetteur ou le service automatique à choisir les conditions d'identification ou de délivrance d'un document au destinataire, par exemple le délai séparant la communication électronique d'une notification de présence d'un document à la disposition du destinataire et la transmission du document à un imprimeur ou le niveau d'authentification requis pour pouvoir accéder à un document.

Ainsi, le dispositif objet de la présente invention et le procédé qu'il met en oeuvre garantissent l'intégralité des processus précités de manière à garantir qu'aucun trou de sécurité, de confidentialité, et d'authenticité n'existe tout au long les échanges et opérations réalisées entre réseau de tiers de confiance et le prestataire. De plus, toute anomalie peut être régularisée rétroactivement soit sur le même site informatique soit sur deux sites distants. Le mode de fonctionnement garantit l'interopérabilité dans l'hypothèse où les différentes opérations de la « chaîne de valeur documentaire » sont réalisées par plusieurs prestataires autour du réseau de tiers de confiance, par exemple, prestataire de facturation et prestataire d'archivage légal.

La mise en oeuvre de la présente invention fourni ainsi, par son mode de fonctionnement :
- une garantie de sécurité (certification, cryptage),
- une garantie de confidentialité (chiffrements de contenu et contenant),
- une garantie d'identité dynamique,
- une garantie d'intégrité de fichier,
- une garantie de conformité (procédures et mentions obligatoires),
- une garantie de légalité (disposition légales ou fiscales EDI, XML, signature),
- une garantie de valeur juridique probante (enregistrement tiers de confiance),
- une garantie de traçabilité (journalisation des opérations),
- une garantie d'appariement ou d'adossement de courrier (dossiers légaux),
- une garantie d'interopérabilité (inter prestataires de services de confiance),

Le serveur de vérification 112 enregistre les tâches réalisées (il fournit une liste récapitulative des tâches) par les quatre modules (service de composition de document 102, service de conservation 104, service de communication 108 et un service d'ampliation 110), quels que soient leurs lieux géographiques (centralisés ou délocalisés) avec les requêtes vis à vis du tiers de confiance pour vérifier :
- l'identité du titulaire,
- l'identité des fondés de pouvoirs,
- les habilitations personnelles (tâches spécifiques),
- les formulaires déposés,
- les procédures des formulaires,
- les login/password,
- les fichiers partenaires ou contreparties,
- le choix de signature (SEP, SEA, SEQ, expliquées plus loin) et
- la procuration de chiffrement avec le code secret.

Si les documents sont traités de manière dispersée et en différé avec les lots rompus, la consolidation des tâches permet de constater les anomalies, et de retrouver les documents en souffrance.

La présente invention met en oeuvre la notion de « période de valeur », ce qui veut dire que le délai, par exemple de douze heures, de validité d'un courrier à transmettre, à un assuré par exemple, pourra automatiquement périmer des tâches inachevées et déclencher une alerte auprès de l'émetteur du document.

Les listes de tâches ou « jobs lists » sont transmises en mode très sécurisé par la technologie « flowtrack », qui assure les contrôles de l'opérateur habilité à effectuer une tâche, du couple de machines en communication entre elles, de la tâche d'encryption et du blocage en cas de non conformité). Cette technologie permet d'ordonnancer les tâches avec les attributs de confiance nécessaires vis-à-vis de chaque opérateur et fonction d'opérateur avec un horodatage, une empreinte, par exemple de type « sha1 », le couple de transmission (tiers de confiance/opérateur) et le nom ou la fonction de la machine ou du serveur adressé (composition, commutation, archivage, ampliation, communication). Toute anomalie dans l'ordonnancement sort une alerte ou un arrêt d'ordonnancement. Le traitement des flux d'ordonnancement est « parallélisé » pour gérer la scalabilité des traitements documentaires à valeur juridique probante.

Préférentiellement, certaines informations ne sont, en aucun cas, enregistrées (par exemple celles de type nom d'utilisateur et mot de passe ou la procuration chiffrement/code secret) mais le système mémorise (en anglais « log ») le résultat de l'opération ou du contrôle. Bien entendu ces informations sont horodatées.

Les opérations les plus critiques peuvent être encadrées dans la mémoire de « log » : le début d'une opération, la fin d'une opération et le statut résultat. Ceci renforce la validité de l'information. Par exemple, pour l'horodatage d'une signature d'un document, on horodate le condensât, ou « hash », du document (et on obtient une preuve de possession sûre) puis on signe le condensât et on horodate le résultat (et ainsi on obtient un intervalle de signature précis).

On observe que si on utilise un mécanisme de type connu par l'homme du métier sous le nom de « syslog », il est préférable :
- de mettre en oeuvre un protocole de communication sécurisée (même si tout est dans la même salle blanche) avec contrôle de "l'identité" des machines concernées,
- de "signer" les données mémorisées ou « logs », par une procédure de signature symétrique, la clef de signature étant générée à intervalle régulier et échangée par un processus crypté,
- de contre-signer les données mémorisées à intervalle de temps régulier avec une signature asymétrique.

Les signatures, symétriques et contre-signatures, asymétriques peuvent être enregistrées dans une log spécifique ce qui permet de ne pas perturber le contenu de la log informations. Les logs centralisées doivent être enregistrées sur deux machines différentes en temps réel.

Le fait de mémoriser en central n'autorise pas à ne pas mémoriser en local, sur la machine qui réalise l'opération. En revanche, les logs locales n'ont pas besoin d'être renforcées.

Enfin toutes les machines participantes doivent être synchronisées en temps (en anglais « time-synchrones »).

Dans donne, dans toute la fin de la description, des informations complémentaires aux informations données ci-dessus, pour constituer des modes de réalisation particuliers ou des variantes des modes de réalisation exposés ci-dessus.

Le système de dématérialisation est un ensemble de sous-systèmes obéissant à une méthode de traitement des données informatiques garantissant :
- la création d'une multitude de documents différents : les formulaires, fichiers structurés,
- la vérification des caractères sensibles discriminants : les attributs de confiance, règles, procédures,
- la commutation des informations de gestion : les échanges en partie double,
- la conservation symétrique des preuves : bilatéralité des originaux archivés et
- la distribution des services demandés : copies, partage des données.

Dans le cas de mise en oeuvre d'une architecture centrée sur un serveur de la toile (en anglais « web-centric ») avec des fonctions légales délocalisées, l'unicité de la plate-forme est assurée par deux agents agissant dans le même centre de données (en anglais « Data Center ») de manière à ne prendre aucun risque opérationnel sur le transfert d'informations.

L'enregistrement des identités numériques et des règles de gestion par personne ou par entreprise est « web-centric » ou supra-nationale, au même titre que la composition de documents et la commutation de messages nécessaires à la gestion.

Par contre, sur le plan légal ou contractuel, l'original électronique se référant aux dispositions juridiques nationales, et la copie papier imprimée à proximité du destinataire, se conforment à des « mesures » d'archivage et des contingences matérielles locales, ce qui justifie un réseau de correspondances transfrontalières spécialisé.

Seules certaines fonctions de confiance peuvent être délocalisées sur un réseau de correspondants sécurisés sans interférer sur les modules opérationnels délocalisés. Ce sont notamment des fonctions liées à l'horodatage et à la certification des identités numériques se référant aux listes de révocation nationales.

Préférentiellement, la symétrie des preuves d'archivage et la commutation des messages en partie double, c'est-à-dire en réalisant deux documents sur la base du document original, sont appliquées et garantissent l'authenticité de tous les documents originaux.

Pour la combinaison des fonctions de dématérialisation réparties sur deux agents hébergés dans le même Data Center, l'un des agents est affecté au réseau tiers de confiance, dit « RTC ». Le principe de neutralité du tiers de confiance veut qu'il dispose des attributs de confiance des personnes agissant sans faire lui-même leurs opérations documentaires à valeur juridique probante qui sont confiées au second agent. Ce premier agent RTC est avant tout un bureau d'enregistrement dépositaire des attributs de confiance intervenant dans les courriers ou dans les transactions dématérialisées. C'est aussi ce premier agent qui suit les listes de révocation des certificats d'identité numérique, ainsi que les marques de temps (horodatage par les horloges atomiques).

Sur chaque processus de dématérialisation, et dans la séquence des missions réalisées par l'agent prestataire des services, il communique les attributs de confiance qui rentrent dans la configuration des opérations : composition, conservation-archivage, communication et ampliation.

En fonction des anomalies remontées dans ces circonstances par l'agent prestataire de services, le premier agent peut modifier la notation de l'identité numérique ou réviser l'état de certaines procédures douteuses en vigueur (régulation systémique).

Le second agent est affecté aux missions de confiance. Il gère le processus de dématérialisation de bout en bout :
- la composition des fichiers structurés,
- l'archivage des documents et des preuves d'échanges,
- la commutation de messages ou d'images PDF et
- la production de copies par tous les moyens.

Entre ces quatre modules, qui participent à la dématérialisation des documents et des transactions électroniques, il existe une piste d'audit avec des contrôles de confiance et de conformité, et des relevés d'anomalies.

Toutes ces mentions sont listées pour préserver la traçabilité de chaque « original » entre ces modules et avec les correspondants locaux sollicités.

Le procédé de dématérialisation ainsi décrit garantit efficacement que les trois dimensions du document juridique fondé sur un contenu structuré papier (écrit ou imprimé), des procédures d'échanges organisées et la signature manuscrite des parties, sont fidèlement transposées dans une version électronique à valeur juridique probante.

Les trois dimensions électroniques à valeur juridique probante sont réunies ainsi :
- les personnes, par l'authentification forte électronique,
- le document, par la certification du fichier structuré et
- les procédures, par traçabilité, signature et archivage.

Pour chaque utilisateur, la dématérialisation s'opère simplement grâce à un « bureau privé de correspondance » mis à sa disposition par le réseau de tiers de confiance.

Chaque utilisateur est titulaire, pour la dématérialisation, des documents envoyés ou reçus d'un compte courant de correspondance pour la commutation de messages, et d'un coffre fort électronique pour l'archivage juridique des preuves de correspondance.

En confiant à son tiers de confiance, à travers un réseau de communication sécurisée, ses attributs de confiance, chaque utilisateur peut déléguer des pouvoirs sur l'ensemble des tâches de correspondance concernant la composition des documents, leur transmission, leur conservation et l'ampliation.

L'originalité de cette architecture fonctionnelle permet également une « gestion mobile et collaborative » des documents dématérialisés en individualisant avec les procédures internes et les signatures électroniques toutes les tâches de correspondance dématérialisée.

Les tâches de correspondance sont effectuées en toute sécurité quel que soit le pays et ses contraintes réglementaires.

On observe qu'il existe une réelle interopérabilité juridique et fonctionnelle dans la dématérialisation des documents car la traçabilité peut être contrôlée de bout en bout, et l'archivage légal des preuves électroniques peut être délocalisé en fonction des mesures d'authentification et de conservation en vigueur sur le plan national.

La dématérialisation est organisée sur deux structures indépendantes :
- un système de confiance dans les conventions d'échanges (systèmes de mesure et de transmission) et
- un système de gestion des documents (création et services).

Le système de confiance est fondé sur une technologie d'enregistrement des identités numériques, des attributs personnels, des listes de révocation, et des marques de temps.

Le système de gestion comprend quatre modules opérationnels qui embarquent « les codes génériques » , c'est à dire les identités numériques et les attributs de confiance des parties prenantes à la transaction, que ce soit un courrier-fichier simple, ou un contrat-fichier structuré.

La dématérialisation est effectuée, sur un plan opérationnel, par un prestataire de services répartis en quatre modules : composition des documents, conservation des originaux, commutation de messages, et ampliation des preuves.

La gestion des documents exploite chaque module opérationnel en récapitulant toutes les tâches effectuées avec les attributs de confiance correspondants sur une piste d'audit.

Cette « traçabilité » permet de contrôler systématiquement par une « liste » exhaustive les procédures internes, les règles externes et les mesures de légalité et de confiance.

La « chaîne de sécurité et de confiance » existe ainsi par construction grâce à la combinaison des modules/tâches/attributs de confiance récapitulés sur chaque « liste » séquentielle, horodatée, déposée en coffre fort électronique, et séquestrée chez un huissier.

En ce qui concerne l'adhésion d'un utilisateur invité par un autre utilisateur, adhérent inscrit au réseau tiers de confiance R.T.C., celui-ci confie au tiers de confiance son « fichier partenaires » ou « fichier de correspondants », c'est-à-dire son le carnet d'adresses.

Le tiers de confiance est mandaté par l'adhérent pour envoyer des invitations d'ouverture d'un « compte courant de correspondance » à toutes ses contreparties dans son carnet d'adresses.

Cette proposition adressée au destinataire, ou invité, concerne l'usage d'un « bureau privé de correspondance », gratuit pour le « courrier entrant ». Les invitations sont envoyées :
- soit par courrier électronique (« e-mail ») sécurisé (si le carnet d'adresses l'indique),
- soit par courrier postal via Posteasy : lettre simple avec un prospectus,
- soit par SMS (si le carnet d'adresses indique le numéro mobile),
- soit par une combinaison des trois.

Si cette proposition convient au destinataire, il est invité à se connecter sur l'interface d'enregistrement et d'ouverture du compte courant de correspondance : l'URL est indiquée pour se connecter.

Naturellement, en acceptant l'invitation et « son » bureau de correspondance, le destinataire d'une première lettre recommandée avec accusé de réception toute électronique peut instantanément lire son courrier et le télécharger.

L'invitation est nominative. Elle contient un numéro d'invitation. Elle indique le nom de l'utilisateur invitant. La proposition d'ouverture du « compte courant de correspondance » comprend :
A. des services gratuits :
   1. Un « bureau privé de correspondance » pour réceptionner du courrier ou des documents sécurisés
      - avec la notification instantanée des « remises » via e-mail ou SMS,
      - avec la fonction d'accusé de réception à valeur juridique probante,
      - avec la fonction de téléchargement PDF Image ou XML Pivot et
      - avec la piste d'audit pour chaque correspondance-courrier certifiée.
   2. Un « espace d'archivage » des « documents entrants » conservés en Data Center (durée maximum gratuite 2 ans glissants)
B. des services payants : avec une réduction de tarif 50% la première année
   1. Envoi de courriers ou documents sortants
   2. Archivage légal courriers ou documents sortants (3ans)
   3. Partage des dossiers en « mode collaboratif » dans un « Data Center »
   4. Gestion d'« e-mails » sécurisés et enregistrés en Data Center, ensuite horodatés et séquestrés chez un huissier de justice.

Si l'invitation lui convient, l'invité s'inscrit en deux temps.

Au cours d'une phase de pré-inscription, l'invité décline son identité sur le formulaire de pré-inscription :
- nom, prénom,
- adresse physique/postale et
- adresse téléphoniques : téléphone fixe, télécopie, télécopie électronique, mobile.

Ensuite, le formulaire lui demande d'approuver les conditions générales de services (aussi nommées par leur acronyme « CGS ») : on décrit les « prestations-modèles » de courrier dont le tiers de correspondance assure la transmission sécurisée à valeur juridique probante :
- lettres simples ou documents hybrides,
- lettres ou documents recommandés hybrides et
- lettres ou documents recommandés dématérialisés.

On lui demande ensuite de choisir un nom d'utilisateur (« Login ») personnel pour accéder à son bureau de correspondance et à son compte courant de correspondance. On précise à l'invité qu'il reçoit aussitôt un « mot de passe » par le moyen de communication de son choix :
- par mobile,
- par télécopie ou
- par pli postal scellé.

Puis, au cours d'une phase d'inscription, quand il est muni de son « mot de passe », le titulaire peut terminer l'inscription à son bureau privé et à son compte courant de correspondance. On observe qu'il existe, sur ce bureau, des fonctions de gestion gratuites en options. Par exemple, ce bureau donne accès à une rubrique destinée à l'enregistrement des utilisateurs par le titulaire du compte de correspondance. Un accès à l'historique du compte courant de correspondance permet aussi de suivre tous les mouvements de courrier avec leurs statuts d'envoi ou de réception. Si la première session, de pré-inscription a été interrompue, l'invité doit se reconnecter avec son nom d'utilisateur et son mot de passe. Il complète, si nécessaire, l'état civil en donnant l'identité exacte de l'administrateur du compte courant de correspondance (c'est le titulaire).

L'administrateur précise pour les opérations de réception concernant chaque prestation modèle (types de courrier) les personnes habilitées (les fondés de pouvoir) : nom, prénom, adresse, mobile, e-mail, télécopie. L'administrateur précise, pour chaque personne désignée les opérations autorisées, par exemple parmi l'émission de documents en lettre recommandée avec accusé de réception, la lecture de documents, le téléchargement de documents et la consultation historique.

L'administrateur attribue, à chaque fondé de pouvoir, un nom d'utilisateur et un mot de passe personnel et se charge d'informer ces personnes de ces données d'accès personnelles.

En variante, le bureau d'enregistrement peut transmettre séparément le nom d'utilisateur, avec les habilitations, par courrier sécurisé postal, et par ailleurs, un mot de passe, par exemple sur le mobile personnel du destinataire, sous forme de minimessage.

L'administrateur précise éventuellement, pour les opérations payantes, les personnes habilitées : nom, prénom, adresse, mobile, e-mail, télécopie (même procédure d'habilitation et d'information sécurisée).

Les opérations payantes sur les prestations modèles (par exemple, les types de courrier) concernent la composition/validation des documents, l'expédition par tous les moyens, et l'archivage fidèle et durable.

Le titulaire du bureau et du compte de correspondance sécurisée choisit également l'un des moyens de paiement mis à sa disposition.

L'administrateur coche sur l'onglet « signature personnelle » pour se faire délivrer un code secret :
- soit par minimessage,
- soit par télécopie,
- soit par courrier postal.

On observe que le code secret est une authentification forte pour l'accusé de réception effectué par le destinataire vis à vis de son tiers de correspondance qui dispose de sa procuration pour chiffrer, horodater et archiver légalement ce récépissé.

Pour terminer l'inscription, il est proposé au titulaire de consulter le contrat d'adhésion au réseau tiers de confiance, réseau qui fixe les règles d'échanges de courrier ou de documents électroniques à valeur juridique probante.

Pour valider son contrat d'adhérent au réseau tiers de confiance, il suffit qu'il active son code secret sur l'interface pour signer son bulletin d'adhésion.

L'inscription se termine. Une copie conforme du contrat d'adhésion mentionnant le numéro d'adhérent et le numéro de compte courant de correspondance est envoyée en lettre recommandée avec accusé de réception à l'adresse postale déclarée.

Le tiers de confiance agissant en tant que bureau d'enregistrement confirmera l'identité numérique si :
- l'accusé de réception est retourné signé via la Poste et
- la copie conforme papier (LRAR) est retournée signée par l'adhérent avec les justificatifs d'identité nationale ou d'état civil demandés, eux aussi signés à la main « certifiés conformes ».

Le tiers de confiance délivre, en fonction de la qualité de l'enregistrement obtenu, un certificat d'adhésion avec une notation d'identité numérique (IN) de 1 à 3+.

L'interface d'inscription dans son bureau de correspondance précise que si l'adhérent a obtenu une notation pour son identité numérique égale ou supérieure à 3, il peut demander, en plus, un « certificat de signature électronique adhérent » gratuit, ou bien un « certificat de signature qualifiée » payant car délivré par une autorité de certification publique.

En ce qui concerne la confirmation de l'inscription, l'invitant est instantanément informé de son inscription. Son carnet d'adresses est complété avec le numéro d'adhérent de l'invité. Il a connaissance de la notation d'identité numérique de sa contrepartie. Si les frais d'inscription sont à sa charge, ils sont débités sur son compte financier de correspondance.

Le destinataire d'une lettre recommandée toute électronique, appelé LRAR, ou d'une lettre suivie, reçoit une notification lui expliquant qu'il peut accuser réception et lire son document instantanément en s'inscrivant de suite.

Dès que son inscription est terminée, il remplit l'« accusé de réception » figurant sur l'interface de son bureau :
- il coche le numéro de document à ouvrir et
- il inscrit son code secret.

Aussitôt le document s'ouvre et il peut prendre connaissance de son contenu.

Le tiers de correspondance archive dans un coffre fort électronique le document recommandé avec son accusé de réception chiffré et horodaté.

Si le destinataire n'a pas répondu à la notification de remise de courrier LRAR numérique, accompagnée d'une invitation personnelle, le document est automatiquement traité en courrier hybride avec une trace légale papier acheminée par la poste dès lors que le délai de réponse excède deux à trois jours.

La convention entre les parties (expéditeur/fournisseur et destinataire/client) prévoit de remplir les mentions suivantes :
1. L'identité des parties :
   - personne morale : statuts, imprimé Kbis, administrateur désigné, fondé de pouvoir, personnel habilité, adresses (courrier / facturation), coordonnées (téléphone, télécopie, mobiles)
   - qualification des parties :
      - pour le courrier (émetteur et destinataire réciproquement),
      - pour la facture (fournisseur, client) et
      - pour les autres contrats (préciser).
   - autres informations :
      - procuration : désigner la personne et sa fonction
2. La nature des Echanges :
   - modèles de courrier : fichiers (structurés ou non),
   - modèles de facturation : fichier (structuré ou non) et
   - modèles de contrats : fichiers (structuré ou non).
3. La nature de la signature :
   - signature à l'émission :
      - courrier,
      - facture et
      - autres contrats.
   - signature à la réception :
      - courrier,
      - facture et
      - autres contrats.
4. Le choix des prestataires de « services de confiance » : options de chaque partie
   Pour la dématérialisation « par excellence », celle qui est reconnue par la meilleure notation délivrée par un cabinet d'audit et d'expertise indépendante (système d'évaluation métrique), il est indispensable que les trois systèmes de composition numérique, de communication électronique, et d'archivage légal soient intégrés chez le même tiers de confiance et dans le même Data Center.

Le risque opérationnel et systémique est quasi nul dans ces conditions puisque la moindre erreur est corrigée par la plate-forme alors qu'entre plusieurs prestataires, l'analyse de l'erreur et le risque de litige diffère la solution de plusieurs heures ou journées entre les parties.

En ce qui concerne la désignation des tiers de confiance, leurs mandats sont choisis par les parties avec leurs « objets » de gestion à distance.

La dématérialisation des documents recommandés ou suivis est généralement opérée par un tiers de confiance neutre (conformément aux réglementations en vigueur) de manière à établir :
- la valeur probante du document,
- l'accusé de réception et
- l'archivage légal des preuves.

Dans cette mission, le tiers de confiance intervient dans la correspondance entre les parties prenantes en trois phases :
1. La composition et/ou validation du document
   - authentification de l'émetteur et contrôle d'intégrité,
   - vérification du document ou du fichier structuré,
   - composition de l'original immatriculé et
   - validation et signature personnelle.
2. La transmission et réception du message
   - certification de messages signés,
   - commutation de messages (bilatéralité),
   - communications électroniques (notification, téléchargement) et
   - horodatage des messages enregistrés.
3. La conservation et la restitution des preuves
   - contrôle de légalité et de conformité,
   - dépôt légal en coffre fort électronique,
   - suivi d'activité et attestation de preuves et
   - séquestre Huissier de Justice et restitution.

L'émetteur transmet au tiers de confiance soit un « document signé » soit un « fichier structuré » de données. Dans les deux cas, le tiers de confiance vérifie la conformité et signale toutes anomalies.

L'original du document est assorti d'un matricule ou d'un code barre avant d'être signé pour transmission au destinataire.

Le destinataire est notifié, par minimessage, télécopie, télécopie électronique, ou e-Mail pour consulter le document sur son « compte courant » de correspondance sécurisée.

Le document recommandé dématérialisé est conservé en dépôt légal dans deux coffres forts électroniques (« C.F.E. ») pour assurer un archivage fidèle et durable.

Le document recommandé est ensuite transmis par commutation de message aux deux comptes courants de correspondance sécurisée.

Le « document recommandé », reçu par le destinataire, est subordonné, pour sa lecture, à la signature préalable d'un bordereau d'« accusé de réception ». Ce bordereau dématérialisé confirme la réception avec les références du pli déposé (matricule, numéro d'enregistrement en compte courant de correspondance et numéro de dépôt légal en coffre fort électronique).

En revanche, le « document suivi » fait seulement l'objet d'une notification et d'une remise en compte courant de correspondance et sa lecture requiert une authentification avec la « signature personnelle » du destinataire disposant de l'habilitation nécessaire.

Pour la transmission des documents, l'expéditeur et le destinataire doivent être adhérents au réseau de correspondance sécurisée R.C.S..

Si destinataire n'est pas enregistré, il reçoit une invitation l'informant de la remise d'un document recommandé, et précisant la gratuité des « services de réception ».

Les signatures électroniques dont la notation est de niveau 3 sont généralement destinées à l'expédition et à l'accusé de réception (notion de parapheur électronique).

Dans des modes de réalisation particuliers, on met en oeuvre une signature électronique adhérent (SEA) avec un certificat privé et réservé aux échanges dans le réseau de correspondance sécurisé (fichier Partenaires).

On propose ou reconnaît aussi l'existence d'une signature électronique qualifiée (SEA) qui est destinée à tous les échanges dans le domaine public et dans le réseau d'utilisateurs adhérents.

Un adhérent peut soit utiliser une signature préexistante employée pour d'autres applications personnelles (déclarations fiscales par ex.), soit se faire octroyer une signature qualifiée émise par une autorité de certification à qui le dispositif objet de la présente invention a transmis le dossier d'enregistrement si la notation est 3+.

Le RTC assure l'archivage légal et la restitution des documents dématérialisés sur les durées choisies par les adhérents (1 à 10 ans).

La différence entre le document recommandé et le document suivi existe au niveau de la notification et de l'accusé de réception :
- pour le « recommandé », la notification comporte le numéro du dépôt légal en coffre fort électronique et le numéro d'enregistrement dans le compte courant de correspondance. Le destinataire authentifié et, figurant sur le fichier partenaires de son correspondant, doit remplir le formulaire dématérialisé de l'« accusé de réception » en indiquant le numéro du dépôt légal inscrit sur la notification, et en utilisant au choix sa signature personnelle (SEP), adhérent (SEA) ou qualifiée (SEQ). Le document recommandé ne peut être lu sans avoir rempli le bordereau dématérialisé « accusé de réception ».
- la notification du « document suivi » ne possède qu'un numéro d'enregistrement.

On décrit, ci-après, les procédures de dématérialisation pour les documents de correspondance à valeur probante, lettre suivie (LS) ou lettre recommandée (LR).

La "correspondance organisée » repose sur deux principes : la conformité et la légalité du courrier électronique, d'une part, et l'adhésion préalable à une convention ou un réseau de correspondance sécurisée (R.C.S). On peut se référer au modèle de contrat d'adhésion. Comme exposé plus haut, les modalités d'enregistrement au réseau de correspondance sécurisée envisagent soit la candidature spontanée, soit la procédure d'invitation.

En ce qui concerne la conformité et la légalité du courrier électronique à valeur probante, ces notions s'appliquent sur le fichier structuré ou non structuré à partir duquel est composé le document courrier électronique préparé par l'expéditeur, ou émetteur.

La correspondance de courrier concerne des lettres suivies (LS) ou des lettres recommandées (LR). Ces lettres peuvent être préparées soit sur le poste de travail de l'utilisateur, soit directement sur la plate-forme du tiers de confiance de correspondance, c'est à dire préparées dans un Data Center sur des modèles mis à la disposition des utilisateurs.

Ces lettres sont créées soit en "texte libre", ce qu'on a l'habitude de qualifier "fichier non structuré", soit au contraire, ces lettres sont créées en "fichier structuré". L'intérêt du fichier structuré, c'est de respecter un formulaire contenant les données nécessaires qui sont situées avec des balises dans des champs particuliers ; certaines de ces données sont des mentions obligatoires telles que la dénomination sociale ou l'adresse du destinataire, et tous ces champs font l'objet de contrôles de cohérence. L'autre intérêt du fichier structuré, c'est de subordonner la création, la publication, la transmission, et l'archivage du document à des vérifications de conformité ou de légalité qui sont confiées au tiers de confiance dans l'intérêt des deux parties prenantes à la correspondance.

Toutes ces contraintes sont naturellement répertoriées dans la convention d'échanges signée par les deux parties avant de commencer leur « correspondance organisée ».

Le « fichier structuré » peut être créé et validé sur le poste de travail de l'expéditeur avant l'expédition du document confiée au tiers de confiance de correspondance.

Dans l'autre hypothèse, les données sont préparées sur le poste de travail et communiquées au tiers de confiance qui les fusionne sur le modèle de document déposé chez lui. Dans ce cas, l'expéditeur prévenu de la composition effectuée par le tiers de confiance, peut valider à distance l'original du document avant son expédition à l'adresse du destinataire par les moyens de transmission choisis. Dans ce cas précis, le tiers de confiance qui est dépositaire du formulaire et qui reçoit les données pour composer le document original, vérifie que les mentions obligatoires sont bien remplies avant de proposer l'expédition du document à la signature de l'émetteur.

La convention de correspondance signée par chacune des parties, indépendamment l'une de l'autre, les fait adhérer au réseau de correspondance sécurisé R.C.S. Ils sont à ce titre membres adhérents au réseau RCS. A cette occasion, le contrat de prestations de services entre l'expéditeur et son tiers de confiance, indique précisément si chaque adhérent utilise pour le courrier sortant (envoi de documents dématérialisés) des formulaires structurés avec des mentions obligatoires, et si le prestataire de services est responsable de la composition des documents originaux, ou seulement responsable du contrôle de leur légalité ou de leur conformité.

Généralement, la lettre est un courrier fondé sur un fichier non structuré. Mais la plupart des grandes entreprises s'organisent actuellement en fonction des règles métiers, des contraintes réglementaires, et des nouvelles dispositions des lois sur la sécurité financière, pour échanger avec leurs partenaires ou leurs contreparties régulières des formulaires intégrant des fichiers structurés et des contrôles.

La composition et/ou la vérification de ces formulaires sont confiées à un tiers de confiance de correspondance qui garantit ainsi la légalité et ou la conformité des documents pour les deux parties.

Pour les fichiers structurés, soit la composition est faite par l'émetteur et, dans ce cas, le tiers de confiance de correspondance limite sa prestation à vérifier l'existence des mentions obligatoires, soit le tiers de confiance intervient comme prestataire de composition du document et, dans ce cas, il fait la fusion des données reçues de l'émetteur sur le formulaire électronique dont il est dépositaire ; le résultat de sa composition est d'abord vérifié par le tiers de confiance et ensuite validé par l'émetteur afin d'effectuer l'expédition du document par tous les moyens et l'archivage des preuves de cette correspondance.

La notion de contrôle de sécurité est relative à l'identification à distance des parties et à l'intégrité des données communiquées.

En plus des examens (mentions obligatoires, fichier partenaires, adresses ou destinations finales du document) à faire sur la nature même du fichier informatique à partir duquel le document original est établi, le tiers de confiance doit « contrôler à distance » l'identité de l'émetteur en authentifiant sa signature électronique. Il doit aussi vérifier l'intégrité de son message. Il doit enfin authentifier le destinataire et vérifier s'il a bien signé un accord préalable de correspondance électronique sécurisée avec sa contrepartie via le réseau RCS (adhésion au réseau de correspondance sécurisée).

La remise du courrier dématérialisé au destinataire suppose en effet que les deux parties aient déjà défini et convenu à l'avance des modalités de "réception" des documents électroniques : la « boite aux lettres » électronique hébergée et gardée par un tiers de confiance dans son « Data Center » est la meilleure solution et sécurité. Sans « boite aux lettres » hébergée et sécurisée par un tiers de confiance, la preuve de réception ne peut être établie facilement et ni instantanément. Et les éventuelles anomalies de correspondance ne peuvent être décelées, notifiées, et corrigées efficacement.

La dématérialisation des documents repose par définition sur la réduction des risques de litige et de recours devant les tribunaux ; la contestation même de la validité d'un document et d'une correspondance dématérialisée ruine la chaîne de confiance et son prestataire.

La dématérialisation s'organise préventivement en s'assurant que tout le processus de gestion et de signature ne « contient » aucun trou de sécurité. En cas de dysfonctionnement, il est aussi prévu un système de détection des anomalies, et pour chacune d'entre elles, il est prévu un dispositif de correction instantané qui est mis en oeuvre dans le même « Data Center ». Autrement dit le dispositif de correction n'est assujetti à aucune autorité externe afin d'éviter les suspens et les délais incompatibles avec la sécurité qui doit protéger l'enchaînement des transactions électroniques.

Le contrôle de sécurité et de légalité touche donc non seulement le contenu du message avec ses mentions obligatoires, mais aussi le contenant. Le contrôle porte aussi sur l'enveloppe de correspondance électronique à partir de laquelle le tiers de confiance va authentifier l'identité de l'émetteur, qui envoie, et du destinataire, qui reçoit ou accuse réception.

L'adresse électronique sécurisée pour recevoir le courrier ou pour accuser réception doit bien être une adresse officielle, c'est à dire une adresse vérifiée et enregistrée par un tiers de confiance neutre. Chaque adresse est enregistrée dans le contrat d'adhésion pour l'émetteur et déclarée pour le destinataire dans le fichier partenaires qui initie par des invitations l'enregistrement des contreparties déclarées.

Le fichier partenaires est conservé par le tiers de confiance neutre tel que le précise la réglementation en vigueur.

Sans ce contrôle de légalité touchant l'identité des personnes, leur adresse de correspondance, leur signature et le contenu structuré de leurs messages (document courrier et document avis de réception ou coupon réponse), la valeur probante de chaque document électronique ne peut être établie sûrement et l'archivage sans contrôle de légalité expose les parties à des contestations le jour de sa restitution.

L'adhésion préalable au réseau de correspondance sécurisée R.C.S. suppose la mise en place d'une convention de correspondance à valeur probante. En effet, la correspondance de lettres ou de courrier hybrides (papier et PDF image), et de documents totalement "dématérialisés" repose sur le principe d'une "convention de correspondance".

La convention d'échanges organisés est basée sur la nécessité d'obtenir, de prime abord, l'adhésion des contreparties ou de ses correspondants réguliers ou professionnels. Cette adhésion aux règles d'échanges et de correspondance sécurisée se réfère souvent à une norme communautaire (EDI, XML, ...) et aux pratiques établies par le tiers de confiance de correspondance.

Il est ainsi établi que la correspondance de courrier à valeur probante se fonde sur la nécessité de faire figurer chaque contrepartie ou destinataire sur son "fichier partenaires" et d'obtenir son consentement sur les règles d'échanges établies. Ces dispositions sont prioritaires avant de commencer tout mouvement de correspondance.

Toute personne morale ou physique qui adresse un courrier à une contrepartie nouvelle, c'est à dire à une personne n'ayant pas encore souscrit au contrat d'adhésion (réseau de correspondance sécurisé), a généralement recours aux services de confiance de son tiers de correspondance pour soumettre ou proposer au « nouveau destinataire » ce contrat d'adhésion.

De cette façon, les deux parties acceptent des règles d'échanges identiques ou symétriques chez le même tiers de confiance.

Les deux parties bénéficient des mêmes droits et avantages pour administrer les preuves de correspondance électronique : chaque preuve constatée par le tiers de confiance de correspondance est établie et conservée de manière symétrique et bilatérale. Et la preuve ainsi enregistrée est horodatée et séquestrée chez un huissier de justice pour être opposable aux tiers.

Le contrôle de légalité sur le fichier de correspondance et le contrat d'adhésion entre les parties prenantes à un courrier électronique sont des éléments fondamentaux pour établir la valeur probante d'un document "dématérialisé", c'est à dire sans recours à des « preuves matérielles ».

Pour faciliter les contrôles de légalité et d'adhésion mutuelle, le recours au tiers de confiance de correspondance est pratique car il est organisé pour effectuer ces démarches et ces vérifications dans l'intérêt des deux parties.

Vis à vis des compagnies d'assurances, ce modèle de sécurité et de réduction des risques opérationnels est de nature à limiter les primes de risques.

Dans la mesure où les droits des personnes, leurs signatures et les structures de fichiers peuvent évoluer à tout moment, le recours au tiers de confiance est pratique car il s'engage à « maîtriser » ces évolutions.

Le cahier de procédures pour les documents électroniques à valeur probante (lettres suivies ou recommandées) traite successivement chacune des contraintes de la dématérialisation dans l'ordre des facteurs mis en oeuvre pour garantir la légalité et la sécurité sur toute la « chaîne de correspondance » :
- préparation-composition : identification et fichier structuré,
- transmission-réception : certification et identification et
- archivage-restitution : validation et conservation.

Le contrat d'adhésion à la convention de "correspondance dématérialisée" comporte :
- l'inscription personnelle,
- l'identification,
- les attributs personnels,
- la composition des documents,
- les modèles de correspondance,
- la signature électronique,
- le fichier partenaires,
- les prestations de services sécurisés (tiers de confiance, tiers de correspondance, tiers d'archivage) et
- l'invitation des partenaires.

En ce qui concerne la procédure de correspondance dématérialisée, elle comporte :
- l'émission initiale,
- l'originel : création du document,
- le dépôt légal, l'archivage : coffre-fort électronique (CFE),
- la commutation de message : deux comptes courants correspondances (CCC),
- la notification au destinataire,
- l'accusé de réception (AR),
- l'originel de l'AR,
- l'archivage de l'AR,
- la remise de l'AR en CCC,
- l'information à l'expéditeur,
- la consultation, téléchargement,
- la procédure d'échec : alternative document hybride,
- les types de courrier : document recommandé ou suivi et
- l'appariement : dossier recommandé électronique.

Chaque personne morale ou physique s'inscrit au réseau de correspondance sécurisé R.C.S., avec son état civil, ses coordonnées téléphoniques et son adresse Internet.

Le tiers de confiance tient l'annuaire de ses adhérents qui sont ainsi dans une communauté fermée et sécurisée.

En ce qui concerne l'Identification à distance, l'inscription et l'enregistrement des identités personnelles intègrent éventuellement celles des utilisateurs ou employés à qui sont confiées certaines fonctions de correspondance.

Les habilitations sont nominatives pour préparer les données, valider le document, transmettre, réceptionner, lire ou consulter, et télécharger.

Les attributs personnels sont les caractères discriminants généralement utilisés pour établir l'état civil et pour qualifier la personne inscrite : identification de la personne morale (« Kbis »), carte d'identité, identifiant bancaire, fiscal ou social sont les justificatifs le plus souvent utilisés.

Mais, pour une entreprise inscrite, c'est aussi la fonction individuelle et sociale qu'il convient de préciser : gérant, mandataire social, administrateur, directeur délégué. Le représentant de la société qui s'inscrit au réseau de correspondance sécurisée RCS pour utiliser un compte courant de correspondance, est qualifié d'« administrateur de l'application » et, à ce titre, il peut donner des habilitations pour les fonctions de correspondance. Tous ces caractères, déposés chez le tiers de confiance pour identifier les personnes et les authentifier ensuite à distance, sont dénommés « attributs de confiance ».

Les attributs de confiance sont déposés chez le tiers de confiance pour lui permettre d'identifier la personne à distance à partir de son certificat ou de son code secret. Ces deux « objets » d'identification portent en effet certains attributs pour établir le lien entre les personnes et leurs droits dans l'application de correspondance et de gestion du compte courant de correspondance.

On associe également aux attributs, certains objets personnels de correspondance tels que les formulaires avec leurs procédures de gestion particulières.

En ce qui concerne la composition des documents, si ce sont des données qui sont reçues par le tiers de confiance, cela veut dire que l'adhérent a préalablement décidé avec son prestataire de lui confier la composition du document sur la base d'un fichier structuré dont le modèle a déjà été déposé chez lui.

En tout état de cause, le tiers de confiance effectue le contrôle de légalité et de conformité en vérifiant l'identité de l'émetteur, l'intégrité des données reçues, l'existence du destinataire dans son fichier partenaire (adhérent existant avec des coordonnées sans anomalies) et il vérifie que toutes les mentions obligatoires existent dans le document.

La composition du document consiste à fusionner les données sur le « modèle déposé » correspondant, en y intégrant, éventuellement, un code à barres et la « notation » de chaque partenaire ayant un compte courant de correspondance.

La « notation » est un indice de sécurité qui indique la valeur ou la qualité de l'enregistrement de chaque personne ou titulaire d'un compte courant de correspondance. La notation de l'identité de chacune des parties permet de prévenir chaque partie des risques éventuels existant sur l'identité de la contrepartie, notamment si la procédure d'enregistrement est en cours ou si le rejet d'un courrier simple ou recommandé postal met en cause l'exactitude du domicile ou de la domiciliation administrative.

Dans la mesure où le tiers de confiance traite des correspondances hybrides et dématérialisés, il peut détecter un certain nombre d'anomalies qui font varier la notation de l'identité personnelle, ce qu'on appelle l'« identité dynamique » (IDD).

En ce qui concerne les modèles de correspondance, chaque adhérent peut déposer ses modèles de documents. Ce sont généralement des documents contractuels respectant un formalisme avec des règles métier, des mentions obligatoires ou complémentaires, et des contrôles de cohérence.

Pour chaque formulaire, il est possible pour l'adhérent de désigner les personnes chargées de transférer les données, de valider la composition du document, et d'ordonner sa transmission avec une signature.

Le tiers de confiance peut aussi recevoir des documents « prêts à l'expédition », et dans ce cas son rôle se limitera à vérifier l'existence des identités/matricules/comptes de correspondance des parties prenantes avant d'effectuer l'expédition.

Dans certains cas, si les documents originaux communiqués par l'expéditeur sont destinés à être archivés durablement chez le tiers de confiance « archiveur », ce prestataire s'engage à refaire le contrôle de légalité et les tests de conformité sur la base définie dans la convention de correspondance dématérialisée. De cette manière, on évite d'archiver des documents nuls et non avenus.

Dans d'autres cas, le tiers de confiance agit comme un prestataire de composition de document à part entière, et généralement, il intervient sur un modèle se référant à un fichier structuré dont il est chargé de remplir toutes les mentions obligatoires à partir des données communiquées par l'émetteur.

Les lettres suivies ou recommandées sont généralement des documents ne faisant pas référence à un fichier structuré. Les contraintes légales et contractuelles amènent aujourd'hui les expéditeurs à confier de plus en plus souvent à leur tiers de confiance le soin de structurer leur courrier ou leurs documents dématérialisés pour éviter toute contestation ou litige juridique ultérieurement.

De toutes les manières, les entreprises qui ne se conformeraient pas aux normes de la « dématérialisation » ne pourront pas se prévaloir d'une quelconque conformité au regard des lois de sécurité financière qui leur imposent de démontrer que les risques opérationnels dans le domaine administratif sont bien maîtrisés.

Faute de certification dans ce domaine, les entreprises se rapprochent donc des prestataires tiers de confiance certifiés. (TAJ, etc...).

En ce qui concerne la signature électronique, chaque adhérent a le choix entre trois signatures pour se faire authentifier à distance et pour assurer l'intégrité du document durablement.

Dans la mesure où le tiers de confiance crée le document dans son "Data Center" sur la base des données transmises en toute sécurité, l'intégrité du document créé dans le "Data Center" n'est pas mise en cause. En effet, le mouvement de transmission se faisant dans le Data Center entre deux comptes courants de correspondance, il n'existe aucun « risque de livraison » (en anglais « delivery risk »).

De plus, comme la « traçabilité » des échanges est organisée sur une base bilatérale (gestion en partie double, c'est-à-dire avec copie du document originel dans le compte courant du destinataire), toute erreur ou dysfonctionnement interne seront immédiatement détectés et seront régularisés rétroactivement sans difficulté. Par contre l'« intégrité du document original » doit être assurée durablement par la conservation en archivage légal se référant à la norme, par exemple les normes AFNOR.

Pour le document créé, transmis et archivé dans le même « Data Center », l'authentification de l'émetteur à partir de sa signature est donc un élément essentiel. A ce titre, dans des modes de réalisation, on met en oeuvre un double dispositif d'authentification pour la signature d'un document.

L'émetteur est authentifié une première fois par son mot de passe pour accéder à son compte courant de correspondance (CCC) ou pour accéder à ce qui lui tient lieu de bureau de correspondance : sur cette interface il peut valider, signer et ordonnancer l'expédition de son document. A ce niveau de signature, il peut activer un deuxième code secret pour s'authentifier et autoriser son tiers de confiance à chiffrer le document électronique avec son certificat de signature qui est qualifié ou sécurisé. L'authentification se trouve ainsi renforcée.

L'authentification avec contrôle d'intégrité par l'intermédiaire d'un téléphone mobile et la signature déportée en salle blanche (signature du tiers de confiance) contribuent à renforcer l'authentification et l'intégrité dans un contexte de mobilité complète.

Les signatures sont, ci-dessous, énumérées dans l'ordre de leur force probante :
Pour la signature électronique personnelle « SEP », l'adhérent dispose d'un code d'authentification personnelle (code « pin ») et d'un code secret exclusivement réservé à l'exercice de la signature qualifiée qui est utilisée par le tiers de confiance pour signer par procuration et donc pour chiffrer les documents à expédier. De cette manière, l'intégrité du document original est assurée pendant l'archivage légal. La convention d'adhérent prévoit ce service de confiance et précise que toutes ces opérations de signature sont immatriculées, horodatées et confirmées à l'adhérent. Toutes les opérations de signature sont aussi consignées dans un journal de signatures qui est séquestré chaque jour chez un huissier de justice. Chaque « session » de transmission de document dématérialisé fait l'objet d'un rapport de « traçabilité » qui est intégré dans le compte courant de correspondance et « apparié » au document lui-même. Le rapport de « traçabilité » de chaque document original contient toutes les informations d'immatriculation et d'horodatage concernant les actes d'authentification et les actes de chiffrement en précisant chaque fois la nature de la signature électronique utilisée.

Pour la signature électronique adhérent « SEA », le réseau de correspondance sécurisée, distribue aux adhérents qui en font la demande dans leur bulletin d'inscription, un certificat privé de signature électronique exclusivement réservé aux mouvements de correspondance et d'archivage dans le réseau de tiers de confiance, ainsi qu'aux opérations intermédiaires gérées par les partenaires-adhérents. Chaque certificat électronique porte les attributs personnels de l'adhérent ou des personnes déléguées (fondés de pouvoir). Ces attributs ont donc été préalablement enregistrés et validés par le tiers de confiance, à partir de la déclaration d'état civil et de la réception des pièces justificatives certifiées conformes à l'original par le titulaire du compte courant de correspondance. Toutes les opérations faites avec ce « certificat adhérent » sont enregistrées et séquestrées chez l'huissier de justice. La liste de révocation ou de "suspension" d'un certificat est tenue sur un serveur isolé dans le même "Data Center", mais son exploitation a été confiée à un tiers indépendant de manière à ce que dans certaines situations le tiers de confiance ne soit pas juge et partie. Le certificat peut être téléchargé à distance pour être installé par l'utilisateur sur son poste de travail ou sur une clef USB. Comme la procédure d'adhésion prend plusieurs jours, le temps de rassembler les pièces du dossier, le certificat adhérent ne peut être délivré au jour de l'inscription, mais seulement après la date de délivrance de l'attestation d'adhésion. Pour cette raison, si l'inscrit ne possède pas déjà un certificat public qualifié tel qu'expliqué dans le paragraphe suivant, la personne ne peut signer son inscription électronique qu'avec la première signature dénommée « signature électronique personnelle » SEP.

Pour la signature électronique qualifiée « SEQ », l'adhérent peut acheter et utiliser un certificat de signature électronique qualifié qui est distribué « en vis à vis » par une autorité de certification qui émet des certificats et qui les personnalise en fonction des attributs personnels qui lui ont été remis par la personne elle-même ou par le tiers de confiance délégué qui est un « bureau d'enregistrement. Dans ce cas, l'adhérent devra indiquer dans son bulletin d'adhésion l'existence de ce certificat de manière à prévenir le tiers de confiance des démarches qui l'oblige pour chaque signature opérée à consulter systématiquement la liste de révocation (certificat annulé ou suspendu) publiée par l'autorité de certification.

Le tiers de correspondance est celui qui assure les communications électroniques, et ceci par « commutation de messages » entre les deux comptes courants de correspondance sécurisés, avec des options de routage (délivrance par la poste, e-mail ou télécopie électronique sécurisé). Pour chaque transmission, la certification des échanges et la notification du document au destinataire sont des services rendus par le tiers de correspondance (vérification de la validité des certificats de signature à l'origine de ces échanges).

Le tiers d'archivage assure d'abord le contrôle de légalité du document qui est transmis et ensuite seulement, l'archivage fidèle et durable est effectué avec les preuves de correspondance. Le tiers d'archivage chiffre le document avec sa signature qualifiée pour préserver l'intégrité du document original, et ceci pour le déposer dans le coffre fort électronique de l'adhérent avec un numéro d'ordre et un horodatage. Il sait restituer ensuite chaque document à la demande de son propriétaire.

L'invitation d'un partenaire peut aussi se faire spontanément au moment de la transmission d'un document à une personne non encore identifiée et enregistrée. Elle figure dans le répertoire du « fichier partenaires » chez l'émetteur mais jusqu'à présent aucune procédure d'invitation n'a abouti. Dans ce cas, la procédure d'invitation/adhésion est lancée simultanément, et le destinataire ne pourra prendre connaissance de son document, que lorsque les formalités d'enregistrement seront terminées. Il peut donc se passer quelques jours sans que le document puisse être ouvert dans le compte courant de correspondance réservé à l'usage du destinataire. Si aucune adhésion n'a été enregistrée dans un délai de huit jours, le document électronique est re-matérialisé par le tiers de confiance, mis sous enveloppe, et acheminé par la poste. Mais le destinataire dont on garde la trace du document électronique dans son compte de correspondance temporaire, n'a pas accès à ce compte tant que l'adhésion n'est pas régularisée.

Si le destinataire refuse l'invitation d'adhésion ou ne parvient pas à remplir son dossier dans les délais impartis (deux à huit jours calendaires), le document électronique est re-matérialisé, c'est-à-dire imprimé par le tiers imprimeur et envoyé par la poste. On accompagne le document papier d'une notice explicative sur le fonctionnement du réseau de correspondance sécurisé et sur les avantages du compte courant de correspondance réservé à son usage temporaire.

Si son adhésion est régularisée dans un délai de trente jours, il garde l'avantage de la conservation du premier document électronique envoyé dans son compte courant de correspondance. Au delà d'un mois, si les formalités d'enregistrement ne sont pas terminées, on considère que la procédure a échoué et le compte courant de correspondance temporaire est fermé.

Les services de réception, en lettre suivie ou recommandée toute électronique comportent la gestion des « accusés de réception », la lecture des documents reçus, le téléchargement, et la conservation à court terme, par exemple un an.

Les services d'expédition comportent de nombreuses options qui concernent la composition, la transmission, et l'archivage légal. Le titulaire du compte courant de correspondance indique si le tiers de confiance est choisi comme prestataire de documents structurés ou non. Dans le premier cas, il lui confie donc ses formulaires avec les règles de gestion de ses fichiers structurés (mentions , balises, procédures de validation et signature). Dans le cas contraire, si les documents sont déjà préparés, le tiers de confiance n'a que la charge de la transmission et de la conservation fidèle et durable. Eventuellement, l'expéditeur peut demander au tiers de confiance d'exercer un contrôle de légalité et de conformité avant d'expédier et d'archiver.

La signature électronique personnelle est une signature simplifiée avec un code secret spécifique. La signature procède d'une authentification à partir de la combinaison entre le « login », le mot de passe et le « code secret » réservé au chiffrement du document signé. Le chiffrement du message est confié au tiers de confiance qui utilise son propre « certificat qualifié » pour effectuer cette opération.

Le titulaire du compte de correspondance accepte donc de donner une procuration au tiers de confiance uniquement pour chiffrer ses documents afin que leur intégrité soit assurée dans le Data Center, et pour la durée d'archivage et de restitution demandée. Le code confidentiel mis en oeuvre pour « la signature à distance » est un numéro à six chiffres. Il peut en prendre connaissance de différentes manières :
- son numéro de téléphone mobile GSM (par minimessage SMS),
- son numéro de télécopieur professionnel et
- son adresse postale.

Le code secret transmis pour activer la « signature personnelle » qui n'est pas «signalé» en réception dans un délai limité, devient inopérant. Ce délai dépend du canal de communication utilisé. Par exemple, ce délai est :
- pour le réseau de téléphonie mobile : 5 minutes,
- pour la télécopie : 10 minutes et
- pour le courrier : 3 jours.

Il faut, en cas d'échec, reprendre la procédure au niveau du choix de la signature électronique. Au delà du délai limite, si le bénéficiaire du code secret n'a pas signalé la bonne réception par le canal choisi, l'interface lui indique qu'il doit reprendre la procédure au niveau du choix du média de communication utilisé pour recommencer ma transmission du code secret.

La personne qui oublie son code secret de signature personnelle peut demander la création d'un nouveau code secret pour sa signature personnelle en rappelant l'indicatif de sa pré-inscription du dossier (exemple : 2005.12.18.21.32.Milou)

La seconde signature électronique est le « certificat privé » distribué par le tiers de confiance : signature électronique adhérent (SEA). Ce certificat n'est donné que lorsque les formalités d'inscription sont terminées, c'est à dire lorsque le tiers de confiance a reçu le ou les justificatifs-papier de l'inscription en ligne. Ces justificatifs doivent tous être certifiés conformes de la main de l'adhérent. Sa signature sera vérifiée est par comparaison avec l'«accusé de réception» que la poste lui a retourné. En fait, la « signature électronique adhérent » SEA peut être donnée au titulaire du compte courant de correspondance dès qu'il a reçu par e-mail son attestation d'adhérent RCS.

La troisième signature électronique peut être choisie avec un certificat distribué par une autorité de certification (AC) publique. C'est la signature électronique qualifiée (SEQ). Soit la personne en dispose déjà sur son poste de travail, soit elle demande au tiers de confiance de lui en procurer une. Cette demande ne peut pas aboutir tant que le contrat d'adhésion et le retour des justificatifs ne sont par formellement validés par l'envoi d'une confirmation du bulletin d'adhésion. Dans ce dernier cas, le dossier d'enregistrement de son état civil « instruit » par le tiers de confiance, sera remis par lui à l'autorité de certification pour qu'elle personnalise le certificat de signature enregistré à son nom.

Si la personne utilise déjà un certificat qualifié sur son poste de travail, elle indiquera le nom de l'autorité de certification de manière à ce que le tiers de confiance de correspondance puisse la consulter systématiquement pour vérifier sur sa « liste de révocation » si le certificat est toujours valide et actif.

Le contrat d'adhésion peut être signé par la première signature appelée « signature électronique personnelle » (SEP). Le contrat d'adhésion ne peut pas être signé encore avec la signature électronique adhérent (SEA) car elle n'est disponible qu'après avoir obtenu l'« attestation d'adhésion ». Or cette attestation n'est envoyée que si toutes les pièces du dossier sont réunies et validées par le tiers de confiance, ce qui prend un certain délai de courrier. Aucune signature électronique adhérent (SEA) ou signature électronique qualifiée ne peut être demandée sans disposer d'une notation de l'identité personnelle et d'adhésion inférieure à la qualification « certifié » (Niveau 3). Dans certaines conditions, le contrat d'adhésion peut être signé par la troisième signature disposant d'un « certificat qualifié », c'est à dire celui qui est fourni par une autorité de certification (AC) : c'est uniquement lorsque ce certificat de signature est déjà installé sur le poste de travail de l'utilisateur au moment de l'inscription.

Quand le contrat d'adhésion est finalement signé, il est enregistré dans le compte courant de correspondance du nouvel adhérent, c'est même le premier échange en « courrier entrant » qu'il peut ouvrir ou consulter.

A ce stade, le contrat d'adhésion est enregistré avec la mention ou la notation : adhérent enregistré (ADE). C'est le deuxième niveau d'identification à distance (notation niveau 2).

Le premier niveau d'identification reconnu par le tiers de confiance, c'est celui qui correspond à la pré-inscription : seul l'état civil restreint ou limité a été rempli soit par les informations communiquées par la personne invitante (adhérent confirmé), soit rempli par le nouvel adhérent en phase préparatoire.

La phase préparatoire est celle précisant l'état civil avec l'approbation du contrat d'adhésion mais sans mention et choix d'une signature électronique. On qualifie ce niveau de « adhérent déclaré » (ou « ADD ») : niveau 1 qui permet uniquement de retirer des lettres ou documents suivis. Il n'y a pas d'accusé de réception explicite avec une signature électronique mais l'adhérent a accepté le contrat d'adhésion.

Il peut poursuivre ultérieurement la procédure d'adhésion pour relever son niveau ou sa notation d'identification. L'attestation d'adhésion n'est formalisée et signée par le tiers de confiance que si les dernières formalités suivantes sont complètement respectées : L'adhérent est invité à envoyer les justificatifs-papier de son « état civil » : photocopies de KBIS, carte d'identité, Passeport, Relevé d'Identité Bancaire (RIB) ou chèque barré. Sur la photocopie de son état civil, on lui demande d'apposer sa signature manuscrite en écrivant « certifié conforme à l'original », et ceci en mentionnant la date.

Dès la réception des documents justificatifs par la poste, le tiers de confiance vérifie que ceux ci sont conformes aux déclarations inscrites dans le contrat d'adhésion électronique. Le tiers de confiance vérifie ensuite que la signature apposée sur le coupon d'« accusé de réception » de la lettre recommandée envoyée par le tiers de confiance est parfaitement identique à celle certifiant la conformité des photocopies de son état civil.

Si cette vérification est positive, le tiers de confiance constitue le dossier électronique de l'adhérant en appariant les documents papiers (justificatifs de l'état civil) qui seront scannés, avec les originaux électroniques existants, à savoir le contrat d'adhésion signé et la lettre recommandée hybride avec son AR (scanné).

Le dossier électronique est archivé dans un coffre fort et toutes les preuves de correspondance sont séquestrées également chez un huissier de justice. A ce stade, le tiers de confiance délivre une attestation d'adhésion dont la mention est la suivante :
- pour un dossier complet sans défaut, « adhérent certifié » ADC Niveau 3 et
- pour un dossier incomplet, « adhérent enregistré » ADE Niveau 2.

Sur un certain nombre de critères propres au tiers de confiance, il est possible d'atteindre une notation maximum Niveau 4. Cette notation est reconnue d'office à l'adhérent qui s'est présenté physiquement dans le bureau d'enregistrement de Posteasy tiers de confiance : c'est l'« enregistrement en vis à vis ».

La qualification pour le niveau 4 est : « adhérent certifié plus » ou « ADC+ ». La notation des adhérents figure systématiquement dans chaque document de correspondance pour informer chaque contrepartie (transparence). Il existe, à cet effet, une zone de sécurité dans chaque correspondance qui précise les références des deux signatures utilisées (SEP, SEA, SEQ) ainsi que la notation actuelle des deux parties adhérentes.

La notation de l'identité est un des aspects de la présente invention. En fonction de la qualité du dossier d'inscription rempli, il est attribué une notation à l'identité du titulaire du compte courant de correspondance. Cette notation permet de repérer facilement d'éventuelles anomalies qui limitent la certification du tiers de confiance ou qui l'amène à certifier avec réserves.

Le téléchargement de la signature adhérent : dès que le contrat d'inscription est validé et confirmé, le tiers de confiance invite l'adhérent à télécharger le certificat de signature (SEA ou SEQ) qu'il a demandé et qui lui a été réservé. Techniquement, il s'agit d'une simple appliquette (en anglais « applet ») java (marque déposée) compatible avec la plupart des configurations informatiques du marché.

Si certaines informations concernant la situation du partenaire ont changé, le tiers de confiance tient informé l'utilisateur invitant et son fichier partenaire est automatiquement mis à jour.

En principe, la dématérialisation repose sur les services d'un tiers de confiance prestataire de documents, opérateur de communications électroniques sécurisées, et archiveur des preuves de correspondance. Ses services portent :
- sur l'authentification forte des parties prenantes à la correspondance,
- sur le chiffrement ou l'empreinte cryptée du document (Sha1 ou.sig),
- sur le fichier structuré avec ses mentions obligatoires,
- sur la commutation de message sécurisé et
- sur l'archivage légal des preuves (1 à 4).

L'émetteur envoie son flux de données par FTPS (protocole de communication sécurisé). En tant qu'adhérent, il est connu du tiers de confiance. Il a notamment déposé ou non des formulaires ou fichiers structurés. Il est authentifié par son login et son mot de passe. Si c'est un serveur qui émet le flux de données, il y a souvent un « certificat serveur » niveau 4.

La validation du pli, par l'expéditeur, pour transmission requiert une signature (code secret ou certificat). La signature électronique personnelle SEP suffit pour ce genre d'opération. L'authentification de l'émetteur est manifeste et le chiffrement peut être opéré sur la plate-forme en « data center » avec le certificat qualifié du tiers de confiance.

Le tiers de confiance construit alors un fichier compressé (« ZIP ») comportant le document, la signature et la certification. Si l'émetteur n'a pas de certificat numérique, c'est le tiers de confiance qui chiffre par procuration. La signature du tiers de confiance sur la base d'une authentification forte apporte au document validé un chiffrement avec le certificat qualifié du tiers de confiance. Le fichier compressé est déposé au coffre fort électronique des deux parties. Le dépôt légal de l'original du document est horodaté et assorti d'un numéro de dépôt légal (numéro « DL ») d'archivage.

La commutation de message met en oeuvre les comptes courants de correspondance « CCC » symétriques des deux parties. La copie fidèle ou le duplicata du document original est remis en compte courant de correspondance. La base de données pli est renseignée : numéro de pli et numéro de dépôt légal avec l'horodatage.

Le pli format, par exemple au format « PDF » (marque déposée) est mis dans le CCC de l'émetteur et il en est informé immédiatement par notification (e-mail, télécopie électronique ou téléphone mobile). La notification est un message notarisé et donc enregistré sous forme e-mail, télécopie électronique ou SMS. L'expéditeur peut ainsi constater que le pli a bien été envoyé.

Le destinataire est avisé, par exemple par e-mail, de la « remise » d'un pli avec son numéro de dépôt légal : en aucun cas il ne peut le lire sans avoir donné son accusé de réception. Il lui est précisé que le document expédié est un pli/document « suivi dématérialisé » (DSD) ou un pli/document « recommandé dématérialisé » (DRD). L'accusé de réception est un document à part entière. Ce document est soit un « coupon réponse » établi au nom du destinataire, soit un document plus formalisé qui recours à la signature électronique pour renforcer la « non-répudiation ».

Avec le numéro de dépôt, la personne habilitée (destinataire) se connecte sur l'interface. Avec son nom d'utilisateur (« Login ») et son mot de passe, le destinataire accède à son compte courant de correspondance (C.C.C.). Pour effectuer le retrait du document recommandé, on lui demande le numéro de dépôt légal (DL). Le destinataire utilise sa signature électronique personnelle pour signer l'« accusé de réception » AR.

Sa signature électronique personnelle comporte un code secret pour renforcer son authentification à distance et pour activer le chiffrement de l'« AR » à partir du certificat qualifié de son tiers de confiance (procuration). Si le destinataire a téléchargé un certificat numérique adhérent ou qualifié (distribué par une autorité de certification, il peut directement et globalement signer son AR en chiffrant lui-même le message. En définitive, la signature électronique chiffre le document « accusé de réception ».

Pour un destinataire qui vient de s'inscrire et qui maîtrise peu l'informatique, on recommande la procédure simplifiée de signature électronique SE : en signature personnelle SEP, le destinataire utilise son code secret d'activation. L'activation permet son authentification forte et confie au tiers de confiance le chiffrement de l'AR (avec un horodatage). Cette procédure simplifiée se compare aux deux autres :
- en signature adhérent, il donne son « certificat privé » et chiffre l'AR par lui-même,
- en signature qualifiée, il donne son « certificat public» et chiffre l'AR par lui-même.

Dans toutes les solutions de signature, la validité du certificat employé est vérifiée. Pour ne pas être juge et partie, les serveurs de signatures sont confiés à un tiers indépendant. Le tiers de confiance vérifie que le numéro de dépôt légal du document expédié figurant dans l'AR est correct. Le tiers de confiance vérifie ensuite pour la signature (.Sig) que le certificat utilisé par le destinataire pour accuser réception est bien valide. Si ces deux contrôles sont positifs, le tiers de confiance compose le document original de l'AR. Il indique dans le journal des signatures pour cet original la nature du certificat utilisé avec un horodatage. Chaque signataire, en activant sa signature électronique reçoit un e-mail de confirmation avec les références du journal de signatures.

Le journal de signature comprend : numéro de pli/document, numéro du dépôt légal/document, numéro du dépôt légal /AR, les deux numéro adhérents, Les deux références signatures avec leur horodatage. L'original de l'« accusé de réception » AR est archivé dans le coffre fort électronique.

Suite à l'archivage du coupon ou du bordereau AR, le duplicata ou la copie conforme, par exemple au format « PDF » est remis en CCC. Les deux parties sont notifiées par e-mail/SMS du coupon d'accusé de réception en CCC. Les personnes habilitées peuvent ensuite consulter et télécharger l'AR. Le destinataire peut ensuite lire et télécharger l'original du « document recommandé ». Sur chaque compte courant de correspondance, le document recommandé et l'accusé de réception sont rangés cote à cote (appariement, gestion de dossier électronique).

La traçabilité des opérations est transmise et séquestrée par un huissier de justice en deux phases :
- composition document, archivage, comptes courant de correspondance et
- composition de l'accusé de réception, archivage, comptes courant de correspondance.

Si des anomalies sont repérées par le tiers de confiance au moment de la saisie de l'« Accusé de Réception », celles-ci sont notifiées au destinataire du document recommandé (liste des anomalies, horodatage, séquestre huissier avec horodatage).

Si le destinataire du document recommandé n'a pas rempli son coupon « accusé de réception » dans un délai de deux à huit jours, le tiers de confiance le matérialise, par le biais du tiers imprimeur, par un document papier sous enveloppe et fait transmettre cette enveloppe par voie postale à l'adresse physique du destinataire.

Le document recommandé en hybride consiste à remettre le courrier sous format papier via la poste au destinataire. Le destinataire prend connaissance du document après avoir signé le bordereau papier accusé de réception (AR).

Il peut ensuite consulter la copie conforme ou fidèle dans son compte de correspondance dès lors qu'il indique sur l'interface le numéro du bordereau de l'accusé de réception qu'il a reçu. Sinon, par ordre chronologique, il peut consulter tous ses plis entrants avec les AR papier qui ont été récupérées par le tiers de confiance et scannées.

L'appariement permet de constituer un dossier recommandé par rapprochement entre les documents papier et numérique. Dès que le tiers de confiance a récupéré le bordereau d'accusé de réception signé sur le papier par le destinataire, celui-ci lui étant remis par la poste, il peut le scanner et le rapprocher du document électronique envoyé.

Le tiers de confiance scanne aussi le document papier AR pour mémoriser dans les deux comptes courants de correspondance la signature manuscrite du destinataire et le code barre qui est associé à la lettre recommandée.

En saisissant le numéro de bordereau AR, l'expéditeur et le destinataire peuvent ouvrir les fichiers, par exemple au format « PDF », du dossier recommandé (le document et l'AR horodatés par la poste).

La différence entre le document dématérialisé « recommandé » et « suivi » se situe au niveau de l'accusé de réception. Pour le document recommandé, le tiers de confiance fait « composer » par le destinataire un « accusé de réception » qui est un courrier à part entière.

La dématérialisation du coupon réponse respecte donc le formalisme de la dématérialisation. Il existe un format structuré à remplir en ligne en mentionnant le numéro de dépôt légal et en utilisant l'une des trois signatures électroniques. Ce document est archivé légalement en coffre fort électronique avec un horodatage et son propre numéro de dépôt. Et aucune lecture du document recommandée ne peut être faite par le destinataire tant qu'il n'a pas signé l'accusé de réception.

Pour la lettre suivie, il suffit de l'authentification simple du destinataire au moment où il se connecte à son compte pour lui laisser prendre connaissance du courrier. Il n'existe pas de document à remplir pour respecter le formalisme légal de l'accusé de réception propre à la correspondance « recommandée ».

Il existe uniquement un coupon réponse qui est facultatif. La preuve d'accusé de réception est administrée en produisant seulement les informations sur l'horodatage au moment de l'accès par le destinataire à son compte courant de correspondance, de même que l'horodatage relevant l'ouverture du fichier, par exemple au format « PDF » contenant le document « entrant ».

Toutes les étapes de la procédure d'adhésion sont horodatées :
- soit au niveau des connections/communications avec le tiers de confiance,
- soit aux niveaux de la « composition », de la « commutation » et de l'« archivage ».

Chaque document possède un numéro de pli, un numéro de dépôt légal et un numéro d'accusé de réception. Chaque signature est journalisée sur une piste d'audit appropriée.

Les communications électroniques peuvent être traitées par téléphonie mobile, par télécopie électronique, par la poste (courrier hybride), ou par téléphone (serveur ou call center).

Toutes les opérations figurant dans le schéma de traitement dématérialisé d'une adhésion, ou bien d'une correspondance dématérialisée (LRAR ou LS), sont enregistrées et horodatées pour alimenter la piste d'audit générale (PAG) séquestrée au jour le jour chez un huissier de justice.

Les mouvements d'enregistrement de message sur les comptes courants de correspondance sont effectués en bilatéral avec un numéro d'ordre. Les mouvements d'archivage dans les coffres forts électroniques sont effectués en bilatéral avec un numéro de dépôt légal. Chaque horodatage est réalisé systématiquement en croisant deux horloges atomiques dont celle de Meudon.

Pour l'horodatage, on utilise le protocole NTP (acronyme de « net time protocol » pour protocole de temps sur Internet) pour se synchroniser à l'horloge atomique de Meudon.
Dans le réseau interne, les horloges des serveurs sont elles mêmes en synchronisation avec les horloges des deux passerelles.

Dans le contrat d'adhésion au réseau de correspondance sécurisée chaque partie est prévenue et accepte que le service soit interrompu de minuit moins trente secondes à minuit plus trente secondes pour neutraliser tout effet de bord entre deux dates, la tolérance de synchronisation étant ici considérée égale à trente secondes.

On donne, ci-après, plus de détails sur un mode de réalisation particulier de notation d'une communication d'un document. Cette notation met en oeuvre trois notes complémentaires :
- une note de validation sur le document,
- une note de validation sur la correspondance et
- une note de validation sur l'archivage.

En ce qui concerne la note de validation la correspondance, elle met en oeuvre, par exemple, les notes ci-dessous :
1 pour un courrier postal simple,
2 pour un courrier postal simple sécurisé à valeur probante,
3 pour un courrier postal recommandé avec accusé de réception,
4 pour un courrier postal recommandé avec accusé de réception sécurisé à valeur probante,
5 pour un courrier électronique sécurisé sans valeur probante,
6 pour un email sécurisé à valeur probante,
7 pour une télécopie électronique (« e-fax ») sécurisée sans valeur probante,
8 pour une télécopie électronique sécurisée à valeur probante,
9 pour un fichier lettre électronique sécurisée à valeur probante,
10 pour un fichier lettre électronique recommandé avec accusé de réception sécurisé à valeur probante,
11 pour un fichier structuré électronique sécurisé à valeur probante,
12 pour un fichier structuré électronique recommandé avec accusé de réception sécurisé à valeur probante et
13 pour un document secret dématérialisé à valeur juridique probante.

En ce qui concerne la notation de l'identité et des documents numériques, la technique de mesure et de notation de la sécurité et de la valeur juridique probante appliquée à tous les documents papiers et dématérialisés est exposée succinctement ci-dessous, sous forme de tableaux, de manière à montrer l'originalité de la méthode et la complexité des systèmes mis en oeuvre.

### 1. Note de Validation sur le document

| | |
|---|---|
| a. Identification personnelle enregistrée | |
| i. Expéditeur enregistré | |
| 1.Carte d'identité | 0 à 4 |
| 2. Code secret fixe + Notation | 0 à 2 |
| 3. Code secret mobile + Notation | 0 à 3 |
| 4. Certificat .PEM | 0 à 4 |
| ii. Destinataire enregistré | |
| 1. Carte d'identité | 0 à 4 |
| 2. Code secret fixe + Notation | 0 à 2 |
| 3. Code secret mobile + Notation | 0 à 3 |
| 4. Certificat .PEM | 0 à 4 |
| b. Support documentaire | |
| i. Non structuré (adresse) | 0 à 1 |
| ii. Structuré texte | 0 à 10 |
| iii. Structuré texte et réseau | 0 à 15 |
| iv. Contrôle de conformité | 0 à 6 |
| c. Procédure interne (habilitations) | |
| i. Expéditeur | 0 à 4 |
| ii. Destinataire | 0 à 4 |
| d. Procédure externe | |
| i. Convention inter change | 0 à 4 |
| ii. Intermédiation tiers de confiance | 0 à 4 |
| e. Signature personnelle (consentement) | |
| i. Expéditeur | |
| ii. Clic | 0 à 1 |
| iii. Clic scellé | 2 à 4 |
| iv. Destinataire | |
| v. Clic | 0 à 1 |
| vi. Clic scellé | 2 à 4 |
| g. Chiffrement confidentialité transport | |
| i. Expédition | |
| 1.https (transport) | 0 à 2 |
| 2.PKI (données) | 0 à 4 |
| ii. Accusé de réception | |
| 1. https (transport) | 0 à 2 |
| 2. PKI (données) | 0 à 4 |
| iii. Téléchargement | |
| 1. https (transport) | 0 à 2 |
| 2. PKI (données) | 0 à 4 |
| | |
| h. Scellement intégrité transport | |
| i. Expédition | |
| 1. SHA1 | 0 à 3 |
| 2. SIG | 0 à 4 |
| ii. Accusé de réception | |
| 1. SHA1 | 0 à 3 |
| 2. SIG | 0 à 4 |
| iii. Téléchargement | |
| 1. https (transport) | 0 à 2 |
| 2. PKI (données) | 0 à 4 |
| i. Horodatage | |
| i. Expédition | 0 à 4 |
| ii. Accusé de réception | 0 à 4 |
| i. Horodatage | |
| i. Expédition | 0 à 4 |
| ii. Accusé de réception | 0 à 4 |
| | |
| j. Journaux de traçabilité : liste récapitulative | |
| Tiers de confiance TDC avec séquestre huissier | |
| | |
| i. Identité expéditeur | 0 à 1 |
| ii. Identité destinataire | 0 à 1 |
| iii. Support documentaire | 0 à 1 |
| iv. Procédure interne (imputation) | 0 à 1 |
| v. Procédure externe (application + fichier partenaire) | 0 à 1 |
| vi. Signature personnelle (consentement) | |
| 1. Expéditeur | 0 à 1 |
| 2. Destinataire | 0 à 1 |
| vii. Procuration | 0 à 1 |
| viii. Chiffrement | |
| 1. Expéditeur | 0 à 1 |
| 2. Destinataire | 0 à 1 |
| ix. Scellement | |
| 1. Expéditeur | 0 à 1 |
| 2. Destinataire | 0 à 1 |
| x. Horodatage | |
| 1. Expéditeur | 0 à 1 |
| 2. Destinataire | 0 à 1 |

### 2. Note de validation sur la correspondance

| | |
|---|---|
| k. Remise en boite aux lettres (ampliation) | |
| Avec un tiers de confiance émetteur | 0 à 4 |
| Sans tiers de confiance émetteur | 0 à 1 |
| l. Remise en compte de correspondance sécurisé | |
| i. Sans bilatéralité | 0 à 1 |
| ii. Avec bilatéralité | 0 à 4 |
| m. Notification par la poste | 0 à 3 |
| n. Notification par eMail ou SMS sécurisé | 0 à 3 |
| o. Accusé de réception par la poste | |
| i. Sans appariement du contenu recommandé | 0 à 1 |
| ii. Avec appariement du contenu recommandé | 0 à 4 |
| p. Accusé de réception électronique | |
| i. Sans signature certifiée | 0 à 0 |
| ii. Avec signature certifiée : | |
| 1. avec appariement du contenu | 0 à 4 |
| 2. sans appariement du contenu | 0 à 1 |
| q. Gestion des anomalies de réception | |
| i. Avis de non réception | 0 à 2 |
| ii. Avis de réception partielle | |
| 1. anomalie d'identité | 0 à 4 |
| 2. anomalie d'intégrité | 0 à 4 |
| 3. anomalie de confidentialité | 0 à 4 |
| 4. anomalie de fichier structuré | 0 à 4 |
| 5. anomalie d'acquittement | 0 à 4 |
| r. Journaux de traçabilité : liste récapitulative | |
| Tiers de confiance TDC avec séquestre huissier | |
| i. Remise | 0 à 1 |
| ii. Notification | 0 à 1 |
| iii. Accusé de réception | 0 à 1 |
| iv. Anomalies | 0 à 1 |

### 3. Note de validation sur l'archivage

| | |
|---|---|
| s. Archivage physique | 0 à 2 |
| t. Archivage électronique : | |
| i. Data Center Norme NZ (DMZ) | 0 à 4 |
| ii. Coffre fort électronique | 0 à 4 |
| 1. numéro de dépôt | 0 à 2 |
| a. bilatéralité | 0 à 4 |
| b. sans bilatéralité | 0 à 2 |
| 2. signature du tiers archiveur | |
| Par défaut : chiffrement et scellement | 0 à 4 |
| 3. procédure de restitution TDC | 0 à 4 |
| 4. procédure de transfert TDC | 0 à 4 |
| 5. appariement de documents en dossier | 0 à 4 |
| 6. ampliation copie conforme | 0 à 4 |
| | |
| u. Journaux de traçabilité : liste récapitulative | |
| Tiers de confiance TDC avec séquestre huissier | |
| i. Archivage physique ou électronique | 0 à 1 |
| ii. Dépôt au coffre fort électronique | 0 à 1 |
| iii. Signature du Tiers archiveur | |
| Par défaut : chiffrement et scellement | 0 à 1 |
| iv. Restitution | 0 à 1 |
| v. Transfert du document original | 0 à 1 |
| vi. Appariement | 0 à 1 |
| vii. Ampliation copie conforme | 0 à 1 |

## Revendications

1. Procédé de sécurisation de transfert de données exécutée par un dispositif de sécurisation de transfert de données, le procédé comprenant :
- une étape de tentative de transmission d'un document depuis un émetteur de document à destination d'au moins un destinataire de document ;
- pour au moins une étape de tentative de transmission, une étape d'évaluation de valeur d'au moins un attribut de transmission dont au moins un attribut d'identification d'au moins un destinataire connu de l'émetteur ;
- une étape de mise à disposition de l'émetteur, de l'évaluation de la valeur de l'attribut de transmission ;
ledit procédé étant **caractérisé en ce qu'**il comprend en outre, si l'évaluation de la valeur de l'attribut de transmission est égale ou supérieure à un niveau de confiance déterminé par l'émetteur, une étape de transmission du document, ou si l'évaluation de la valeur de l'attribut de transmission est inférieure au niveau de confiance, une étape d'arrêt de la transmission du document ou de non transmission du document.

2. Procédé selon la revendication 1, **caractérisé en ce que**, au cours de l'étape d'évaluation, l'évaluation est fonction des anomalies de correspondance observées pour chaque tentative de transmission.

3. Procédé selon l'une quelconque des revendications 1 ou 2, **caractérisé en ce que**, au cours de l'étape d'évaluation, l'évaluation est, en outre, fonction des éléments fournis par le destinataire au cours d'une étape d'inscription à un service de transmission électronique de documents.

4. Procédé selon l'une quelconque des revendications 1 à 3, **caractérisé en ce qu'**il comporte, en outre, une étape d'évaluation de l'identification de l'émetteur dudit document et, lors de l'accès au document par le destinataire, une étape de fourniture, au destinataire de l'évaluation de l'identification de l'émetteur.

5. Procédé selon l'une quelconque des revendications 1 à 4, **caractérisé en ce qu'**il comporte :
- une étape de mise en mémoire d'une copie du document dans une première mémoire accessible par l'émetteur du document mais pas accessible par un destinataire du document,
- pour chaque destinataire du document, une étape de mise en mémoire d'une copie du document dans une deuxième mémoire accessible par ledit destinataire du document mais pas accessible par l'émetteur du document et
- une étape de transmission à chaque destinataire du document, d'une information représentative de l'existence d'une copie du document à sa disposition dans une dite deuxième mémoire.

6. Procédé selon la revendication 5, **caractérisé en ce que**, au cours de ladite étape d'authentification du destinataire, on constitue un accusé de réception et ledit procédé comporte une étape de mise en mémoire, dans chacune des première et deuxième mémoires, dudit accusé de réception en relation avec une copie dudit document.

7. Procédé selon l'une quelconque des revendications 1 à 6, **caractérisé en ce que**, au cours d'une étape de création du document, on attribue audit document des attributs représentatifs de conditions d'authentification du destinataire.

8. Procédé selon l'une quelconque des revendications 1 à 7, **caractérisé en ce qu'**il comporte :
- une étape de mémorisation du document et de l'identification de chaque destinataire,
- une étape de transmission électronique, à au moins une adresse électronique de chaque destinataire du document, d'une information représentative de l'existence du document à sa disposition,
- pour au moins un destinataire du document, une étape de détermination si la durée écoulée depuis l'étape de transmission électronique et avant la réception du document, par ledit destinataire du document, est supérieure à une durée prédéterminée et
- si, pour ledit destinataire du document, la durée écoulée depuis l'étape de transmission électronique et avant la réception du document, par ledit destinataire du document, est supérieure à une durée prédéterminée, une étape d'impression dudit document et de transmission du document imprimé, à une adresse postale dudit destinataire.

9. Procédé selon l'une quelconque des revendications 1 à 8, **caractérisé en ce qu'**il comporte :
- une étape d'identification dite « faible » d'un utilisateur au cours de laquelle ledit utilisateur fournit une ou plusieurs adresses électroniques,
- une étape de transmission de message depuis ledit utilisateur ou vers ledit utilisateur, en mettant en oeuvre ladite première identification,
- une étape d'identification dite « forte » d'un utilisateur, au cours de laquelle ledit utilisateur fournit une preuve de son identité et on lui attribue une paire de clés asymétriques et
- une étape de transmission de messages, depuis ledit utilisateur ou vers ledit utilisateur, en mettant en oeuvre ladite paire de clés asymétriques.

10. Procédé selon l'une quelconque des revendications 1 à 9, **caractérisé en ce qu'**il comporte :
- une étape d'affectation de valeurs d'attributs de confiances à un processus de transfert de données depuis un émetteur de document à un destinataire de document,
- une étape d'édition d'un document, par un émetteur de document, au cours de laquelle l'émetteur de document définit au moins un destinataire et des valeurs d'attributs de confiance requises pour la transmission dudit document et
- pour chaque destinataire pour lequel les valeurs d'attributs de confiances affectées au processus de transfert de données depuis l'émetteur à ce destinataire sont toutes supérieures aux valeurs requises, une étape de transmission, audit destinataire, dudit document.

11. Dispositif de sécurisation de transfert de données, comprenant:
- un moyen pour effectuer une tentative de transmission d'un document depuis un émetteur de document à destination d'au moins un destinataire de document ;
- pour au moins une étape de tentative de transmission, un moyen d'évaluation adapté à évaluer une valeur d'au moins un attribut de transmission dont au moins un attribut d'identification d'au moins un destinataire connu de l'émetteur ;
- un moyen de mise à disposition de l'émetteur, de l'évaluation de la valeur de l'attribut de transmission ;
ledit dispositif étant **caractérisé en ce qu'**il comprend en outre un moyen d'activation ou d'inhibition de la transmission configuré pour activer la transmission du document, si l'évaluation de la valeur de l'attribut de transmission est égale ou supérieure à un niveau de confiance déterminée par l'émetteur, ou si l'évaluation de la valeur de l'attribut de transmission est inférieure au niveau de confiance, arrêter ou empêcher la transmission du document.

## Patentansprüche

1. Verfahren zum Sichern von Datenübertragungen, durchgeführt von einer Datenübertragungssicherungsvorrichtung, wobei das Verfahren Folgendes beinhaltet:
- einen Schritt des Versuchens des Sendens eines Dokuments von einem Dokumentsender zu wenigstens einem Dokumentadressaten;
- einen Schritt, für wenigstens einen Sendeversuchsschritt, des Beurteilens des Wertes von wenigstens einem Sendeattribut, darunter wenigstens einem Identifikationsattribut, von wenigstens einem dem Sender bekannten Adressaten;
- einen Schritt, um dem Sender die Beurteilung des Wertes des Sendeattributs zur Verfügung zu stellen;
wobei das Verfahren **dadurch gekennzeichnet ist, dass** es ferner, wenn die Beurteilung des Wertes des Sendeattributs gleich oder größer ist als ein vom Sender bestimmtes Konfidenzniveau, einen Schritt des Sendens des Dokuments oder, wenn die Beurteilung des Wertes des Sendeattributs kleiner ist als das Konfidenzniveau, einen Schritt des Stoppens des Sendens des Dokuments oder des Nichtsendens des Dokuments beinhaltet.

2. Verfahren nach Anspruch 1, **dadurch gekennzeichnet, dass** im Laufe des Beurteilungsschritts das Beurteilen von für jeden Sendeversuch beobachteten Korrespondenzanomalien abhängig ist.

3. Verfahren nach Anspruch 1 oder 2, **dadurch gekennzeichnet, dass** im Laufe des Beurteilungsschritts das Beurteilen ferner von Elementen abhängig ist, die vom Adressaten im Laufe eines Schrittes des Registrierens bei einem elektronischen Dokumentensendeservice geliefert werden.

4. Verfahren nach einem der Ansprüche 1 bis 3, **dadurch gekennzeichnet, dass** es ferner einen Schritt des Beurteilens der Identifikation des Senders des Dokuments und, während des Zugriffs auf das Dokument durch den Adressaten, einen Schritt des Lieferns der Beurteilung der Identifikation des Senders an den Adressaten beinhaltet.

5. Verfahren nach einem der Ansprüche 1 bis 4, **dadurch gekennzeichnet, dass** es Folgendes beinhaltet:
- einen Schritt des Speicherns einer Kopie des Dokuments in einem ersten Speicher, auf den der Sender des Dokuments zugreifen kann, aber auf den ein Adressat des Dokuments nicht zugreifen kann,
- einen Schritt des Speicherns, für jeden Adressaten des Dokuments, einer Kopie des Dokuments in einem zweiten Speicher, auf den der Adressat des Dokuments zugreifen kann, aber auf den der Sender des Dokuments nicht zugreifen kann, und
- einen Schritt des Sendens, zu jedem Adressaten des Dokuments, einer Information, die die Existenz einer Kopie des ihm zur Verfügung stehenden Dokuments in einem zweiten Speicher repräsentiert.

6. Verfahren nach Anspruch 5, **dadurch gekennzeichnet, dass** im Laufe des Authentisierungsschritts des Adressaten eine Empfangsquittung erzeugt wird und das Verfahren einen Schritt des Speicherns, in jedem des ersten und zweiten Speichers, der Empfangsquittung in Bezug auf eine Kopie des Dokuments beinhaltet.

7. Verfahren nach einem der Ansprüche 1 bis 6, **dadurch gekennzeichnet, dass** im Laufe eines Schrittes des Erzeugens des Dokuments dem Dokument Attribute zugeordnet werden, die Bedingungen zum Authentisieren des Adressaten repräsentieren.

8. Verfahren nach einem der Ansprüche 1 bis 7, **dadurch gekennzeichnet, dass** es Folgendes beinhaltet:
- einen Schritt des Speicherns des Dokuments und des Identifizierens jedes Adressaten,
- einen Schritt des elektronischen Sendens, zu wenigstens einer elektronischen Adresse jedes Adressaten des Dokuments, einer Information, die die Existenz des ihm zur Verfügung stehenden Dokuments repräsentiert,
- einen Schritt des Feststellens, für wenigstens einen Adressaten des Dokuments, ob die Zeitdauer, die seit dem Schritt des elektronischen Sendens und vor dem Empfang des Dokuments durch den Adressaten des Dokuments verstrichen ist, länger ist als eine vorbestimmte Zeitdauer, und
- einen Schritt des Druckens, wenn für den Adressaten des Dokuments die Zeitdauer, die seit dem Schritt des elektronischen Sendens und vor dem Empfang des Dokuments durch den Adressaten des Dokuments verstrichen ist, länger ist als eine vorbestimmte Zeitdauer, des Dokuments und des Sendens des gedruckten Dokuments zu einer Postadresse des Adressaten.

9. Verfahren nach einem der Ansprüche 1 bis 8, **dadurch gekennzeichnet, dass** es Folgendes beinhaltet:
- einen Schritt des Identifizierens, "schwach" genannt, eines Benutzers, in dessen Verlauf der Benutzer eine oder mehrere elektronische Adressen liefert,
- einen Schritt des Sendens einer Nachricht von dem Benutzer oder zu dem Benutzer, unter Implemention der ersten Identifikation,
- einen Schritt des Identifizierens, "stark" genannt, eines Benutzers, in dessen Verlauf der Benutzer einen Nachweis seiner Identität liefert, und Zuordnen dem Benutzer eines Paares von asymmetrischen Schlüsseln, und
- einen Schritt des Sendens von Nachrichten, von dem Benutzer oder zu dem Benutzer, unter Implementation des Paares von asymmetrischen Schlüsseln.

10. Verfahren nach einem der Ansprüche 1 bis 9, **dadurch gekennzeichnet, dass** es Folgendes beinhaltet:
- einen Schritt des Zuweisens von Konfidenzattributwerten zu einem Datenübertragungsprozess von einem Dokumentsender zu einem Dokumentadressaten,
- einen Schritt des Bearbeitens eines Dokuments, durch einen Dokumentsender, in dessen Verlauf der Dokumentsender wenigstens einen Adressaten und Konfidenzattributwerte definiert, die zum Senden des Dokuments benötigt werden, und
- einen Schritt des Sendens, für jeden Adressaten, für den die dem Datenübertragungsprozess vom Sender diesem Adressaten zugewiesenen Konfidenzattributwerte alle größer sind als die benötigten Werte, des Dokuments zu dem Adressaten.

11. Vorrichtung zum Sichern von Datenübertragungen, die Folgendes umfasst:
- ein Mittel zum Bewirken eines Versuchs des Sendens eines Dokuments von einem Dokumentsender zu wenigstens einem Dokumentadressaten;
- ein Mittel zum Beurteilen, für wenigstens einen Sendeversuchsschritt, ausgelegt zum Beurteilen eines Wertes von wenigstens einem Sendeattribut, darunter wenigstens einem Identifikationsattribut, von wenigstens einem dem Sender bekannten Adressaten;
- ein Mittel, um dem Sender die Beurteilung des Sendeattributwertes zur Verfügung zu stellen;
wobei die Vorrichtung **dadurch gekennzeichnet ist, dass** sie ferner ein Mittel zum Aktivieren oder Verhindern des Sendens umfasst, konfiguriert zum Aktivieren des Sendens des Dokuments, wenn die Beurteilung des Wertes des Sendeattributs gleich oder größer ist als ein vom Sender bestimmtes Konfidenzniveau, oder wenn die Beurteilung des Wertes des Übertragungsattributs kleiner ist als das Konfidenzniveau, Stoppen oder Verhindern des Sendens des Dokuments.

## Claims

1. Method for securing data transfer, carried out by means of a device for securing data transfer, the method comprising:
- a step of attempted transmission of a document from a document sender intended for at least one document recipient;
- for at least one step of attempted transmission, a step of evaluating the value of at least one transmission attribute including at least one attribute for identification of at least one known recipient of the sender;
- a step of providing the sender with the evaluation of the value of the transmission attribute;
the method being **characterised in that** it further comprises, if the evaluation of the value of the transmission attribute is equal to or greater than a confidence level determined by the sender, a step of transmitting the document, or, if the evaluation of the value of the transmission attribute is less than the confidence level, a step of stopping the transmission of the document or not transmitting the document.

2. Method according to claim 1, **characterised in that**, in the course of the evaluation step, the evaluation is dependent on the correspondence anomalies observed for each transmission attempt.

3. Method according to either claim 1 or 2, **characterised in that**, in the course of the evaluation step, the evaluation is further dependent on the elements provided by the recipient in the course of a step of registering with a service for the electronic transmission of documents.

4. Method according to any one of claims 1 to 3, **characterised in that** it further comprises a step of evaluating the identification of the sender of the document and, upon access to the document by the recipient, a step of providing the recipient with the evaluation of the identification of the sender.

5. Method according to any one of claims 1 to 4, **characterised in that** it comprises:
- a step of storing a copy of the document in a first memory accessible by the sender of the document but not accessible by a recipient of the document,
- for each recipient of the document, a step of storing a copy of the document in a second memory accessible by the recipient of the document but not accessible by the sender of the document and
- a step of transmitting to each recipient of the document an information item representative of the existence of a copy of the document at his disposal in a second memory.

6. Method according to claim 5, **characterised in that**, in the course of the step of authenticating the recipient, an acknowledgment of receipt is generated and the method comprises a step of storing, in each of the first and second memories, the acknowledgment of receipt in conjunction with a copy of the document.

7. Method according to any one of claims 1 to 6, **characterised in that**, in the course of a step of creating the document, attributes representative of conditions of authentication of the recipient are allocated to the document.

8. Method according to any one of claims 1 to 7, **characterised in that** it comprises:
- a step of storing the document and the identification of each recipient,
- a step of electronic transmission, to at least one electronic address of each recipient of the document, of an information item representative of the existence of the document at his disposal,
- for at least one recipient of the document, a step of determining whether the elapsed duration since the step of electronic transmission and before the receipt of the document, by the recipient of the document, is greater than a predetermined duration and
- if, for the recipient of the document, the elapsed duration since the step of electronic transmission and before the receipt of the document, by the recipient of the document, is greater than a predetermined duration, a step of printing the document and of transmitting the printed document to a postal address of the recipient.

9. Method according to any one of claims 1 to 8, **characterised in that** it comprises:
- a step of so-called "weak" identification of a user, in the course of which the user provides one or more electronic addresses,
- a step of message transmission from the user or to the user, by implementing the first identification,
- a step of so-called "strong" identification of a user, in the course of which the user provides proof of his identity and a pair of asymmetric keys is allocated to him and
- a step of transmitting messages, from the user or to the user, by implementing the pair of asymmetric keys.

10. Method according to any one of claims 1 to 9, **characterised in that** it comprises:
- a step of assigning values of confidence attributes to a process for transferring data from a document sender to a document recipient,
- a step of editing a document, by a document sender, in the course of which the document sender defines at least one recipient and values of confidence attributes required for the transmission of the document and
- for each recipient for which the values of confidence attributes assigned to the process for transferring data from the sender to this recipient are all greater than the required values, a step of transmitting the document to the recipient.

11. Device for securing data transfer, comprising:
- a means for performing an attempted transmission of a document from a document sender intended for at least one document recipient;
- for at least one step of attempted transmission, an evaluation means suitable for evaluating a value of at least one transmission attribute including at least one attribute for identification of at least one known recipient of the sender;
- a means for placing at the disposal of the sender the evaluation of the value of the transmission attribute;
the device being **characterized in that** it further comprises a means for activating or preventing the transmission configured to activate the transmission of the document, if the evaluation of the value of the attribute of transmission is equal to or greater than a confidence level determined by the sender, or, if the evaluation of the value of the transmission attribute is less than the confidence level, stopping or preventing the transmission of the document.
